(19) Europäisches Patentamt / European Patent Office / Office européen des brevets

(11) **EP 3 543 080 B1**

(12) **EUROPEAN PATENT SPECIFICATION**

(45) Date of publication and mention
of the grant of the patent:
**13.04.2022  Bulletin 2022/15**

(21) Application number: **17872404.3**

(22) Date of filing: **16.11.2017**

(51) International Patent Classification (IPC):
**B60W 10/02** (2006.01)      **B60W 10/06** (2006.01)
**B60W 10/10** (2012.01)      **B60W 30/18** (2012.01)
**B60W 30/186** (2012.01)      **B60W 50/14** (2020.01)
**F16D 48/06** (2006.01)

(52) Cooperative Patent Classification (CPC):
**B60W 30/186; B60W 10/02; B60W 10/06;**
**B60W 30/18063; B60W 50/14; F16D 48/06;**
**F16H 61/0213; F16H 61/12; B60W 30/18072;**
B60W 2050/0008; B60W 2050/143;
B60W 2300/125; B60W 2510/0225;
B60W 2510/0241; B60W 2510/0275;      (Cont.)

(86) International application number:
**PCT/CN2017/111401**

(87) International publication number:
**WO 2018/090957 (24.05.2018 Gazette 2018/21)**

(54) **TARGET CLUTCH TORQUE-BASED CREEP CONTROL SYSTEM FOR AUTOMATIC TRANSMISSION OF HEAVY TRUCK**

AUF ZIELKUPPLUNGSDREHMOMENT BASIERTES KRIECHSTEUERUNGSSYSTEM FÜR AUTOMATIKGETRIEBE EINES SCHWERLASTKRAFTWAGENS

SYSTÈME DE COMMANDE DE FLUAGE À BASE DE COUPLE D'EMBRAYAGE CIBLE POUR TRANSMISSION AUTOMATIQUE DE POIDS LOURD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2016  CN 201611011110**

(43) Date of publication of application:
**25.09.2019  Bulletin 2019/39**

(73) Proprietor: **Wabco (China) Co., Ltd.**
**Qingdao, Shandong 266510 (CN)**

(72) Inventor: **TENG, Yutang**
**Qingdao**
**Shandong 266510 (CN)**

(74) Representative: **Eisenführ Speiser**
**Patentanwälte Rechtsanwälte PartGmbB**
**Stralauer Platz 34**
**10243 Berlin (DE)**

(56) References cited:
| | |
|---|---|
| EP-A2- 0 731 294 | CN-A- 102 050 119 |
| CN-A- 103 029 708 | CN-A- 103 359 104 |
| CN-A- 104 925 049 | CN-A- 106 696 964 |
| DE-A1-102012 209 755 | JP-A- 2007 024 094 |
| US-A1- 2003 171 186 | US-A1- 2013 311 055 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B60W 2510/0291; B60W 2510/0638;
B60W 2510/1005; B60W 2510/1015;
B60W 2510/104; B60W 2520/06; B60W 2520/10;
B60W 2540/10; B60W 2540/12; B60W 2710/027;
B60W 2710/0644; F16D 2500/1112;
F16D 2500/3026; F16D 2500/3067;
F16D 2500/30825; F16D 2500/3102;
F16D 2500/31433; F16D 2500/3144;
F16D 2500/50206; F16D 2500/5085;
F16D 2500/70408; F16D 2500/7044;
F16D 2500/7061; F16H 2061/0232;

F16H 2061/1216; F16H 2061/128; Y02T 10/60

## Description

## Technical Field

The present invention relates to the technical field of automotive transmission control, and in particular to a target clutch torque-based creep control system for an automatic transmission (AMT) of a heavy truck.

## Background Art

A heavy truck may often encounter operating conditions in which the heavy truck needs to creep at a low speed (vehicle speed < 5 km/h), for example, an operating condition such as platform/trailer connecting, and vehicle garaging. In these operating conditions, the engine torque and clutch position control need to be properly coordinated and matched to satisfy the following objectives:

(1) the clutch half-engagement is controlled stably and directly to achieve a sensitive and controllable vehicle speed control performance;

(2) the engine torque control can cooperate with the clutch load to satisfy the power requirement in a large vehicle load;

(3) various road conditions can be dealt with to ensure vehicle security;

(4) a specific vehicle speed control range (for example, 0-10 km/h) is allowable for a driver; and

(5) unnecessary slipping friction on the clutch can be reduced as far as possible, the corresponding protection is performed in a timely manner when the clutch overheats, and a sufficient amount of prompting and response time is provided for the driver before the protection action is performed.

In the prior art, the conventional engine-clutch control mode of the automatic transmission (AMT) is relatively independent control on the clutch and the engine, the clutch position control and the engine torque cannot be coordinated to implement control, the torque sensitivity in different positions of the clutch are not taken into consideration, and the driver cannot be provided with sufficient prompting time and overheating degree information prior to the performance of clutch overheating protection. Therefore, the above-mentioned requirements cannot be satisfied at the same time.

For example, CN 103359104 A discloses a creep control method for an automobile. The method comprises the following steps of activating/deactivating a creep control function according to actual vehicle speed and accelerator opening; and when the creep control function is in an activated state, performing operation of determining expected vehicle speed based on the rotating speed of an engine, the expected idle speed of the engine and the position of a braking pedal, performing proportional-integral control on the expected torque of a clutch to regulate the expected torque of the clutch based on a vehicle speed difference between the expected vehicle speed and the actual vehicle speed, and controlling the clutch according to the expected torque of the clutch. Correspondingly, this also provides a creep control system for the automobile. According to the creep control method and the creep control system for the automobile, different driving working conditions are included, and the system is stable in performance and easy to implement.

EP 0 73 1 294 A2 discloses a control for a vehicular automated clutch drivingly interposed between a fuel-controlled engine and a multiple-speed, change-gear transmission providing enhanced low-speed manoeuvring control is provided. Upon manual selection of creep mode, an enhanced creep mode is activated. The Enhanced Creep Mode provides a mode of clutch control substantially identical to that attained in the Creep Mode, except that the degree of clutch engagement and the fuelling of the engine is controlled over a much greater range of throttle pedal movement.

As such, it can be seen that the prior art needs to be further modified and improved.

## Summary of the Invention

In order to avoid the above-mentioned defects of the prior art, the present invention provides a target clutch torque-based creep control system as claimed in claim 1 for an automatic transmission of a heavy truck. Therein are implemented different modes of engine-clutch control in different vehicle states.

The technical solution adopted by the present invention is as follows:

a target clutch torque-based creep control system for an automatic transmission of a heavy truck, wherein the control system comprises an internal combustion engine controlled by an engine control unit (ECU) having a speed closed-loop control function, and a clutch power cylinder, a transmission actuator, and a vehicle transmission system which are controlled by a transmission control unit (TCU); the engine control unit (ECU) collects an accelerator pedal position signal (AP), a brake switch signal (BK), and a current engine speed (ES), and the transmission control unit (TCU) collects a clutch position signal (ACP), a transmission input shaft speed (IS), a transmission output shaft speed (OS), and a direction of travel of vehicle; the (ECU) and the (TCU) are connected to each other by means of a data communication bus, and the (ECU) sends the measured accelerator pedal position signal (AP), the brake switch signal (BK), and the current engine speed (ES) to the (TCU) by means of the data communication bus; a target torque calculation module and a change rate limitation module are added to the transmission control unit (TCU); a clutch synchronization check sub-module, a vehicle coasting check sub-module, and a clutch overheating check sub-module are added to the transmission control unit (TCU), and the (TCU) implements vehicle creep control according to an output signal of each sub-module; the vehicle creep control performed by the (TCU) comprises a creep control mode in a waiting state, a creep control mode in a hybrid accelerator state, a creep control mode in a positive engagement state, and a creep control mode in a synchronization state, and switching between the various different control modes is determined by means of a current vehicle state; the transmission control unit (TCU) obtains a target engine speed (TS) and a target clutch position (ICP) in different vehicle states by means of the vehicle creep control; the transmission control unit (TCU) sends the target engine speed (TS) to the engine control unit (ECU) by means of the data communication bus, and the engine control unit (ECU) controls a fuel injection quantity according to the received target engine speed (TS) and the current engine speed (ES) so as to implement engine speed closed-loop control; and the transmission control unit (TCU) adjusts, by means of the target clutch position (ICP), the clutch-transmitted torque applied to an engine flywheel.

The clutch synchronization check sub-module checks a synchronization state (Sync) between the engine and the clutch in real time according to the current engine speed (ES), the input shaft speed (IS), the current clutch position signal (ACP), and a clutch kiss point (KP) position; when the engine and the clutch are synchronized, the clutch synchronization check sub-module outputs a signal Sync = 1; and when the engine and the clutch are desynchronized, the clutch synchronization check sub-module outputs a signal Sync = 0.

According to the invention, the target clutch torque-based creep control system further comprises a vehicle coasting check sub-module that checks whether the vehicle is in a coasting state Ovrn in real time according to the current engine speed (ES), the input shaft speed (IS), a current gear, and the direction of travel of vehicle; when the vehicle is coasting, the vehicle coasting check sub-module outputs a signal Ovrn = 1; and when the vehicle is not coasting, the vehicle coasting check sub-module outputs a signal Ovrn = 0.

A clutch temperature estimation module used to estimate a current clutch temperature is disposed in the transmission control unit (TCU), the clutch temperature estimation module is configured with an alarm temperature threshold and a protection temperature threshold, and the clutch overheating check sub-module determines a heat state (OH) of the clutch by comparing an estimated temperature obtained from the clutch temperature estimation module, the alarm temperature threshold, and the protection temperature threshold; when the estimated temperature exceeds the set alarm temperature threshold, the clutch switches from a normal state to an alarm state, and in this case, the clutch overheating check sub-module outputs a signal OH = 1; when the clutch is in the alarm state, if the estimated temperature continues to rise and exceeds the protection temperature threshold, the heat state of the clutch switches from the alarm state to a protection state, and in this case, the clutch overheating check sub-module outputs a signal OH = 2; when the clutch is in the protection state, if the estimated temperature drops, the heat state of the clutch does not switch to the alarm state until the estimated temperature drops below the alarm temperature threshold; and when the clutch is in the alarm state, if the estimated temperature drops and the estimated temperature drops below 60°C, the heat state of the clutch switches to the normal state, and in this case, the clutch overheating check sub-module outputs a signal OH = 0.

An alarm module is further disposed in the transmission control unit (TCU), wherein the alarm module is connected to the clutch overheating check sub-module, the alarm module comprises a buzzing alarm, and a buzzing frequency of the buzzing alarm is set to cooperate with the clutch temperature, that is, the buzzing frequency is higher when the clutch temperature is higher; and when the heat state of the clutch is in the alarm state, in the creep control mode in a hybrid accelerator state, the transmission control unit (TCU) can still implement creep control on the clutch, but the transmission control unit (TCU) sends a buzzing alarm to warn a driver that the clutch is about to overheat, and in a range from the alarm temperature threshold to the protection temperature threshold, the buzzing frequency is higher when the temperature is higher.

When the vehicle enters into a creep mode, the vehicle creep control performed by the transmission control unit (TCU) enters into the creep control mode in a waiting state by default; and when the vehicle creep control performed by the transmission control unit (TCU) is in the creep control mode in a waiting state, if the vehicle coasting check sub-module outputs the signal Ovrn = 1, that is, the vehicle is in the coasting state, the vehicle creep control performed by the transmission control unit (TCU) preferentially switches from the creep control mode in a waiting state to the creep control mode in a positive engagement state.

When the vehicle creep control performed by the transmission control unit (TCU) is in the creep control mode in a waiting state, if a driver presses down on the accelerator to a position that exceeds a trigger position of the accelerator, and the clutch overheating check sub-module outputs the signal OH = 0, that is, the heat state of the clutch is in the normal state, the vehicle creep control performed by the transmission control unit (TCU) switches from the creep control mode in a waiting state to the creep control mode in a hybrid accelerator state.

According to the invention, when the vehicle creep control performed by the transmission control unit (TCU) is in the creep control mode in a hybrid accelerator state, if the vehicle coasting check sub-module outputs the signal Ovrn = 1, that is, the vehicle is in the coasting state, the vehicle creep control performed by the transmission control unid (TCU) preferentially switches from the creep control mode in a hybrid accelerator state to the creep control mode in a positive engagement state.

When the vehicle creep control performed by the transmission control unit (TCU) is in the creep control mode in a hybrid accelerator state, if the clutch overheating check sub-module outputs the signal OH = 2, that is, the heat state of the clutch is in the protection state, the vehicle creep control performed by the transmission control unit (TCU) switches to a corresponding state according to the situation of a speed difference between the current engine speed ES and the input shaft speed IS, i.e. if ES - IS < 200 rpm, the vehicle creep control performed by the transmission control unit (TCU) switches from the creep control mode in a hybrid accelerator state to the creep control mode in a positive engagement state; and if ES - IS > 200 rpm, the vehicle creep control performed by the transmission control unit (TCU) switches from the creep control mode in a hybrid accelerator state to the creep control mode in a waiting state.

When the vehicle creep control performed by the transmission control unit (TCU) is in the creep control mode in a hybrid accelerator state, if the clutch synchronization check sub-module outputs the signal Sync = 1, that is, when the engine and the clutch are synchronized, the vehicle creep control performed by the transmission control unit (TCU) switches from the creep control mode in a hybrid accelerator state to the creep control mode in a synchronization state.

When the vehicle creep control performed by the transmission control unit (TCU) is in the creep control mode in a positive engagement state, if the clutch synchronization check sub-module outputs the signal Sync = 1, the vehicle creep control performed by the transmission control unit (TCU) switches from the creep control mode in a positive engagement state to the creep control mode in a synchronization state.

When the vehicle creep control performed by the transmission control unit (TCU) is in the creep control mode in a synchronization state, if the clutch synchronization check sub-module outputs the signal Sync = 0, that is, the engine and the clutch are desynchronized, or a driver presses down on a brake pedal, the vehicle creep control performed by the transmission control unit (TCU) switches from the creep control mode in a synchronization state to the creep control mode in a hybrid accelerator state.

When the vehicle creep control performed by the transmission control unit (TCU) is in the creep control mode in a waiting state, the target clutch position (ICP) is constantly set to the clutch kiss point position, that is, ICP = KP, and the target engine speed (TS) is constantly set to an idle speed, that is, TS = the idle speed of the engine. When the vehicle creep control performed by the transmission control unit (TCU) is in the creep control mode in a positive engagement state, the target clutch position (ICP) positively engages at a fixed speed, that is, ICP[n] = ICP[n-1]- CP_stp, wherein ICP[n] is a target clutch position of a current calculation step, ICP[n-1] is a target clutch position of the last calculation step temporarily stored in the transmission control unit (TCU), and CP_stp is a calibrated clutch engagement position for each step length in the positive engagement state; and the target engine speed (TS) is maintained at a setting of the target engine speed prior to enabling of the positive engagement state.

When the vehicle creep control performed by the transmission control unit (TCU) is in the creep control mode in a synchronization state, the target clutch position (ICP) freezes at a clutch position ICP[Sync0] at which the synchronization state is enabled and remains unchanged, and the target engine speed (TS) is adjusted in the following method: the transmission control unit (TCU) records a target engine speed value TS[Sync0] and an accelerator position AP[Sync0] at the enabling of the synchronization state, and calculates a target engine speed in the synchronization state by means of the following formula:

$$TS = Max((1600 - TS[Sync0])/(100 - AP[Sync0]) \times (AP - AP[Sync0]),600);$$

When the vehicle creep control performed by the transmission control unit (TCU) is in the creep control mode in a hybrid accelerator state, the target engine speed (TS) and the target clutch position (ICP) are dynamically adjusted according to the following steps:

step 1: the target torque calculation module calculates the driver target clutch torque (ItdCltTrq) according to the accelerator pedal position;

step 2: an engine speed controller calculates a corresponding target engine speed (TS) according to the driver target clutch torque (ItdCltTrq);

step 3: the change rate limitation module calculates an allowable clutch torque change rate according to a difference between the target engine speed (TS) calculated in step 2 and the current engine speed (ES), that is, an allowable clutch torque change difference for one step length, and limits the currently calculated driver target clutch torque, wherein a target clutch torque obtained after the limitation is (ItdCltTrqLmt); and

step 4: the transmission control unit (TCU) calculates the target clutch position ICP according to the limited target clutch torque (ItdCltTrqLmt) by means of performing interpolation on a clutch torque transmission curve.

The beneficial effects achieved by the present invention by adopting the above-described technical solution are as follows:

1. In the target clutch torque-based creep control system for an automatic transmission of a heavy truck of the present invention, an increase in the engine speed is always slightly ahead of an increase in the clutch-transmitted torque, and both the engine speed and the torque are always coordinated with each other for control, so as to ensure that when a clutch load is small, the engine speed can be relatively low to reduce clutch slipping friction, and when the clutch load is large, the engine speed can be increased in advance to avoid the occurrence of insufficient engine power.

2. When the vehicle creep control performed by the transmission control unit (TCU) is in the creep control mode in a hybrid accelerator state, the control system of the present invention controls the clutch position according to a clutch torque transmission curve, wherein a difference in the change rate of the clutch-transmitted torque resulting from a position change is taken into consideration, so as to ensure that the driver can stably and linearly control the clutch torque and the vehicle speed.

**Brief Description of the Drawings**

Fig. 1 illustrates the basic structure of a whole vehicle power transmission chain comprising an automatic transmission which is applicable to the present invention.

Fig. 2 illustrates the overall control structure of the present invention, comprising the relationships between all controllers and between a controller and a controlled object.

Fig. 3 illustrates a logic model of a state machine for vehicle creep control performed by a transmission control unit (TCU) in the present invention.

Fig. 4 illustrates a control flow chart of a target clutch position and a target engine speed when the vehicle creep control performed by the transmission control unit (TCU) is in a control mode in a hybrid accelerator state.

Fig. 5 illustrates a curve for calculating a driver target clutch torque according to an accelerator pedal position in the present invention.

Fig. 6 illustrates a curve for calculating the target clutch position according to a filtered driver target clutch torque in the present invention.

Fig. 7 illustrates an input-output block diagram of a clutch synchronization check sub-module in the present invention.

Fig. 8 illustrates an input-output block diagram of a vehicle coasting check sub-module in the present invention.

Fig. 9 illustrates an input-output block diagram of a clutch overheating check sub-module in the present invention.

Fig. 10 illustrates a logic diagram of enabling and disabling of a normal state, an alarm state, and a protection state of a clutch in the present invention.

Fig. 11 illustrates a logic block diagram of dynamically limiting a clutch engagement speed according to a difference between the target engine speed and a current engine speed.

Fig. 12 illustrates a curve for calculating the target engine speed according to the target clutch torque.

Fig. 13 illustrates a change state curve diagram of the driver target clutch torque in a case where an accelerator position exceeds a trigger position (TriggerAP), but does not reach a switch position (SwitchAP).

Fig. 14 illustrates a change state curve diagram of the driver target clutch torque in a case where the accelerator position exceeds the switch position (SwitchAP), but does not reach 100 % of the accelerator position.

Fig. 15 illustrates a change state curve diagram of the target engine speed relative to the driver target clutch torque.

Fig. 16 illustrates a change state curve diagram of the target engine speed (TS), the current engine speed (ES), a clutch-transmitted torque change amount Step, a limited target clutch torque, and the driver target clutch torque (ltdCltTrq).

Fig. 17 illustrates a change state curve diagram of the clutch torque and the engine speed in an operating condition of quickly pressing down on and quickly lifting off an accelerator.

Fig. 18 illustrates a change state curve diagram of the clutch torque and the engine speed in an operating condition of stable accelerator creep implemented according to the control method of the present invention.
Wherein:
1. Internal combustion engine 2. Engine control unit ECU 3. Speed sensor 5. Flywheel 6. Input shaft speed sensor 7. Transmission actuator 8. Clutch power cylinder 9. Transmission control unit TCU 10. Clutch position sensor 11. Vehicle transmission system 12. Accelerator pedal sensor 13. Output shaft speed sensor 14. Brake pedal switch

## Detailed Description of Embodiments

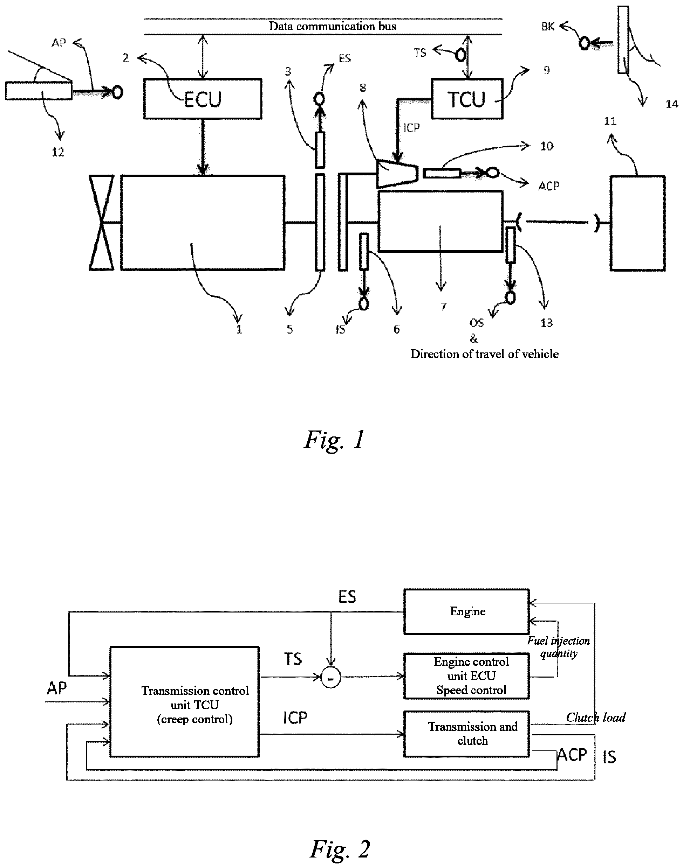

The present invention is further described below in detail with reference to the drawings and the specific embodiments, while the present invention is not limited to these embodiments.
With regard to a target clutch torque-based creep control system for an automatic transmission of a heavy truck, a vehicle automatic transmission system applicable to the control system should have the power assembly structure shown in Fig. 1.
That is, an engine control unit ECU2 having a speed closed-loop control function controls an internal combustion engine 1, and a transmission control unit TCU 9 controls a clutch power cylinder 8, a transmission actuator 7, and another vehicle transmission system 11 comprising a transmission shaft. The TCU controls a position of a dry type friction clutch by means of the clutch power cylinder 8, so as to control the torque transmitted by the engine to the transmission actuator 7.
In the control system, an accelerator pedal sensor 12 is added at an accelerator pedal position to measure an accelerator pedal position signal AP, a speed sensor 3 is added to an engine flywheel 5 to measure a current engine speed ES, a brake pedal switch 14 is added to a brake pedal to measure a brake switch signal BK, a clutch position sensor 10 is added at a clutch position to measure a current clutch position signal ACP, an input shaft speed sensor 6 is added to a transmission input shaft to measure an input shaft speed IS, and an output shaft speed sensor 13 is added to a transmission output shaft to measure an output shaft speed OS and a direction of travel of vehicle. The ECU and the TCU are connected to each other by means of a data communication bus, and the ECU sends the measured accelerator pedal position signal AP, the brake switch signal BK, and the current engine speed ES to the TCU by means of the data communication bus. The TCU sends a target engine speed TS to the ECU by means of the data communication bus. The data communication bus can be any network protocol bus that satisfies a standard definition, for example, J1922, J1939, ISO11898, or the like.
As shown in Fig. 2, the TCU sends the target engine speed TS to the ECU by means of the data communication bus, and the ECU controls a fuel injection quantity according to the received target engine speed TS and the current engine speed ES so as to implement engine speed closed-loop control. The TCU adjusts, by means of the target clutch position ICP, the clutch-transmitted torque applied to an engine flywheel.
The target engine speed TS and the target clutch position ICP are obtained by means of the following vehicle creep control being performed by the TCU.
In the control system, a target torque calculation module and a change rate limitation module are added to the TCU. In the control system, a clutch synchronization check sub-module used to detect a vehicle state in real time, a vehicle coasting check sub-module, and a clutch overheating check sub-module are added to the TCU. The TCU achieves the vehicle creep control according to an output signal of each sub-module. The vehicle creep control performed by the TCU comprises a creep control mode in a waiting state, a creep control mode in a hybrid accelerator state, a creep control mode in a positive engagement state, and a creep control mode in a synchronization state; and switching between the various different control modes is determined by a current vehicle state. The TCU obtains a target engine speed TS and a target clutch position ICP in different vehicle states by means of the vehicle creep control.

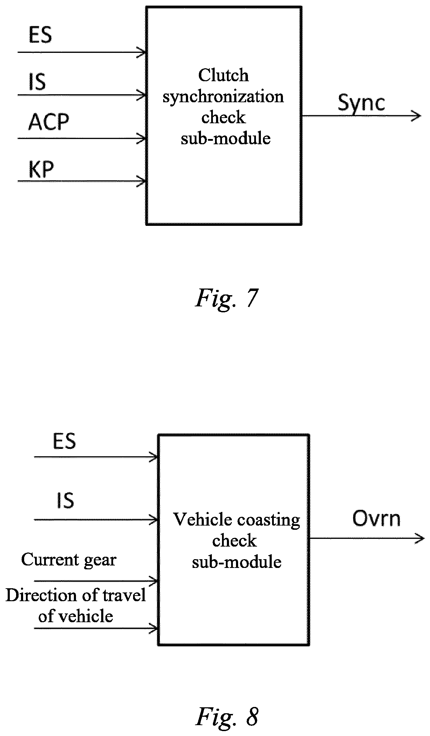

As shown in Fig. 7, the clutch synchronization check sub-module checks a synchronization state Sync between the engine and the clutch in real time according to the current engine speed ES, the input shaft speed IS, the current clutch position signal ACP, and a clutch kiss point KP position, when the engine and the clutch are synchronized, the clutch synchronization check sub-module outputs a signal Sync = 1; and when the engine and the clutch are de synchronized, the clutch synchronization check sub-module outputs a signal Sync = 0.

As shown in Fig. 8, the vehicle coasting check sub-module checks whether the vehicle is in a coasting state Ovrn in real time according to the current engine speed ES, the input shaft speed IS, a current gear, and the direction of travel of vehicle, when the vehicle is coasting, the vehicle coasting check sub-module outputs a signal Ovrn = 1; and when the vehicle is not coasting, the vehicle coasting check sub-module outputs a signal Ovrn = 0.

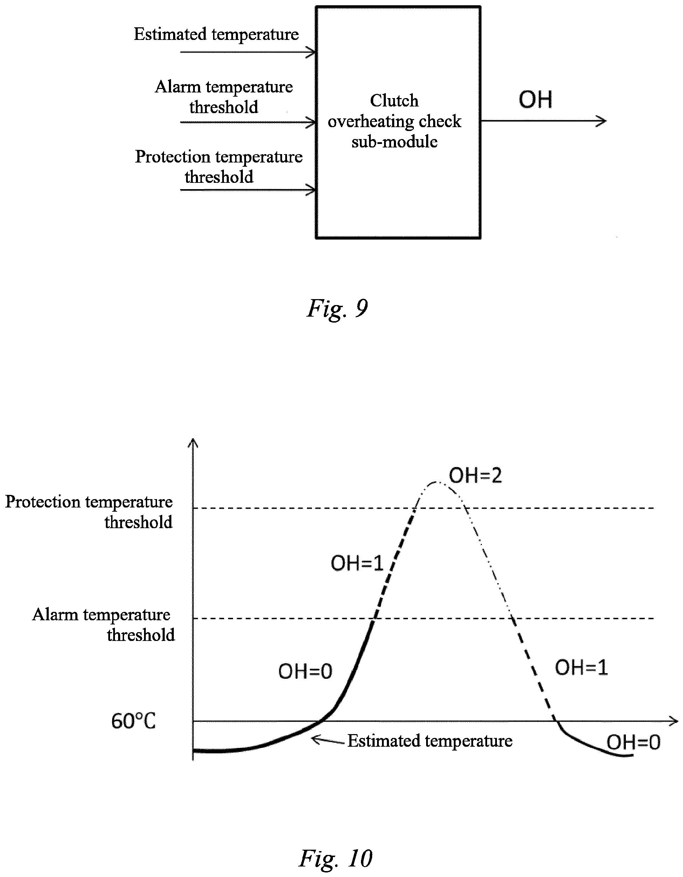

As shown in Fig. 9 and Fig. 10, a clutch temperature estimation module used to estimate a current clutch temperature is disposed in the TCU, wherein the clutch temperature estimation module is configured with an alarm temperature threshold and a protection temperature threshold, and the clutch overheating check sub-module determines a heat state OH of the clutch by comparing an estimated temperature obtained from the clutch temperature estimation module, the alarm temperature threshold, and the protection temperature threshold. when the estimated temperature exceeds the set alarm temperature threshold, the clutch switches from a normal state to an alarm state, and in this case, the clutch overheating check sub-module outputs a signal OH = 1; when the clutch is in the alarm state, if the estimated temperature continues to rise and exceeds the protection temperature threshold, the heat state of the clutch switches from the alarm state to a protection state, and in this case, the clutch overheating check sub-module outputs a signal OH = 2; When the clutch is in the protection state, if the estimated temperature drops, the heat state of the clutch does not switch to the alarm state until the estimated temperature drops below the alarm temperature threshold. when the clutch is in the alarm state, if the estimated temperature drops and the estimated temperature drops below 60°C, the heat state of the clutch switches to the normal state, and in this case, the clutch overheating check sub-module outputs a signal OH = 0.

An alarm module is further disposed in the TCU, wherein the alarm module is connected to the clutch overheating check sub-module, the alarm module comprises a buzzing alarm, and a buzzing frequency of the buzzing alarm is set to cooperate with the clutch temperature, that is, the buzzing frequency is higher when the clutch temperature is higher. When the heat state of the clutch is in the alarm state, in the creep control mode in a hybrid accelerator state, the TCU can still implement creep control on the clutch, but the TCU sends a buzzing alarm to warn a driver that the clutch is about to overheat, and in a range from the alarm temperature threshold to the protection temperature threshold, the buzzing frequency is higher when the temperature is higher.

The vehicle creep control performed by the TCU enters into different states according to the current vehicle state, and in the different states, the TCU controls the target engine speed TS and the target clutch position ICP in different modes.

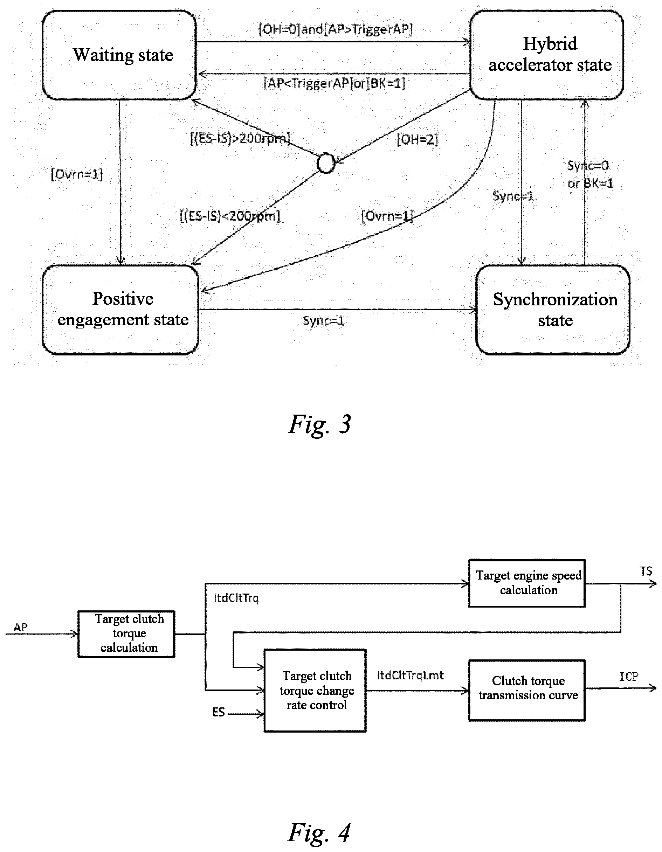

As shown in Fig. 3, in a mode of the vehicle creep control being performed by the TCU, the switching logic between all of the states is as follows.

When the vehicle enters into a creep mode, the vehicle creep control performed by the TCU enters into the creep control mode in a waiting state by default, when the vehicle creep control performed by the TCU is in the creep control mode in a waiting state, if the vehicle coasting check sub-module outputs the signal Ovrn = 1, that is, the vehicle is in the coasting state, the vehicle creep control performed by the TCU preferentially switches from the creep control mode in a waiting state to the creep control mode in a positive engagement state.

When the vehicle creep control performed by the TCU is in the creep control mode in a waiting state, if a driver presses down on the accelerator to a position that exceeds a trigger accelerator position TriggerAP, and the clutch overheating check sub-module outputs the signal OH = 0, that is, the heat state of the clutch is in the normal state, the vehicle creep control performed by the TCU switches from the creep control mode in a waiting state to the creep control mode in a hybrid accelerator state.

When the vehicle creep control performed by the TCU is in the creep control mode in a hybrid accelerator state, if the vehicle coasting check sub-module outputs the signal Ovrn = 1, that is, the vehicle is in the coasting state, the vehicle creep control performed by the TCU preferentially switches from the creep control mode in a hybrid accelerator state to the creep control mode in a positive engagement state.

When the vehicle creep control performed by the TCU is in the creep control mode in a hybrid accelerator state, if the clutch overheating check sub-module outputs the signal OH = 2, that is, the heat state of the clutch is in the protection state, the vehicle creep control performed by the TCU switches to a corresponding state according to the situation of a speed difference between the current engine speed ES and the input shaft speed IS, i.e. if ES - IS < 200 rpm, the vehicle creep control performed by the TCU switches from the creep control mode in a hybrid accelerator state to the creep control mode in a positive engagement state; and if ES - IS > 200 rpm, the vehicle creep control performed by the TCU switches from the creep control mode in a hybrid accelerator state to the creep control mode in a waiting state.

When the vehicle creep control performed by the TCU is in the creep control mode in a hybrid accelerator state, if the clutch synchronization check sub-module outputs the signal Sync = 1, that is, when the engine and the clutch are

8

synchronized, the vehicle creep control performed by the TCU switches from the creep control mode in a hybrid accelerator state to the creep control mode in a synchronization state.

When the vehicle creep control performed by the TCU is in the creep control mode in a positive engagement state, if the clutch synchronization check sub-module outputs the signal Sync = 1, the vehicle creep control performed by the TCU switches from the creep control mode in a positive engagement state to the creep control mode in a synchronization state.

When the vehicle creep control performed by the TCU is in the creep control mode in a synchronization state, if the clutch synchronization check sub-module outputs the signal Sync = 0, that is, the engine and the clutch are de synchronized, or a driver presses down on a brake pedal, that is, BK = 1, the vehicle creep control performed by the TCU switches from the creep control mode in a synchronization state to the creep control mode in a hybrid accelerator state.

In these different states, a control system of the target clutch position ICP and the target engine speed TS is as follows.

When the vehicle creep control performed by the TCU is in the creep control mode in a waiting state, the target clutch position ICP is constantly set to the clutch kiss point position, that is, ICP = KP, and the target engine speed TS is constantly set to an idle speed, that is, TS = the idle speed of the engine.

When the vehicle creep control performed by the TCU is in the creep control mode in a positive engagement state, the target clutch position ICP positively engages at a fixed speed, that is, ICP[n] = ICP[n-1] - CP_stp, wherein ICP[n] is a target clutch position of a current calculation step, ICP[n-1] is a target clutch position of the last calculation step temporarily stored in the TCU, and CP_stp is a calibrated clutch engagement position for each step length in the positive engagement state; and The target engine speed TS is maintained at a setting of the target engine speed prior to enabling of the positive engagement state.

When the vehicle creep control performed by the TCU is in the creep control mode in a synchronization state, the target clutch position ICP freezes at a clutch position ICP[Sync0] at which the synchronization state is enabled and remains unchanged, and the target engine speed TS is adjusted in the following method:

The TCU records a target engine speed value TS[Sync0] and an accelerator position AP[Sync0] at the enabling of the synchronization state, and calculates a target engine speed in the synchronization state by means of the following formula:

$$TS = Max((1600 - TS[Sync0])/(100 - AP[Sync0]) \times (AP - AP[Sync0]), 600);$$

As shown in Fig. 4, when the vehicle creep control performed by the TCU is in the creep control mode in a hybrid accelerator state, the target engine speed TS and the target clutch position ICP are dynamically adjusted according to the following steps:

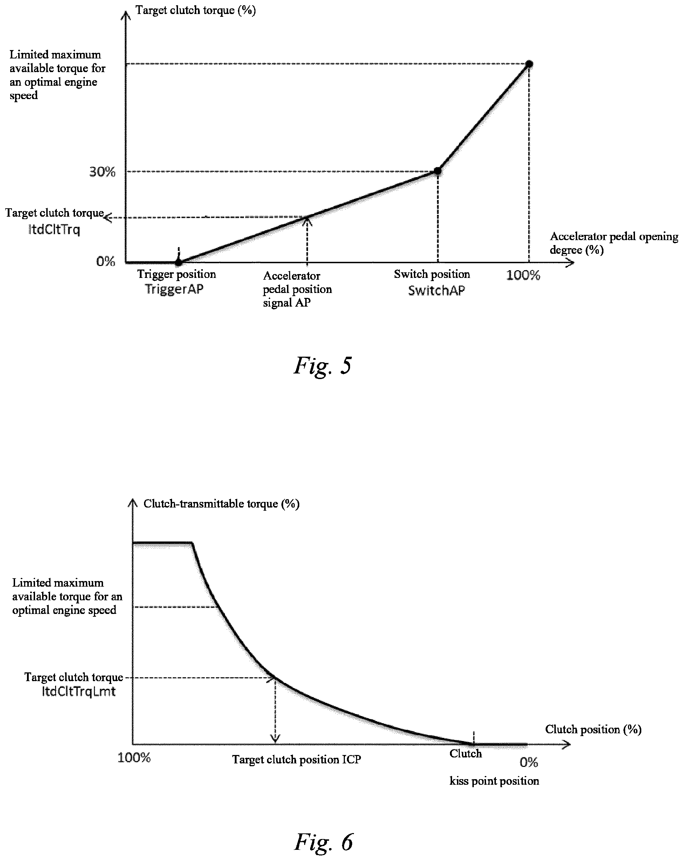

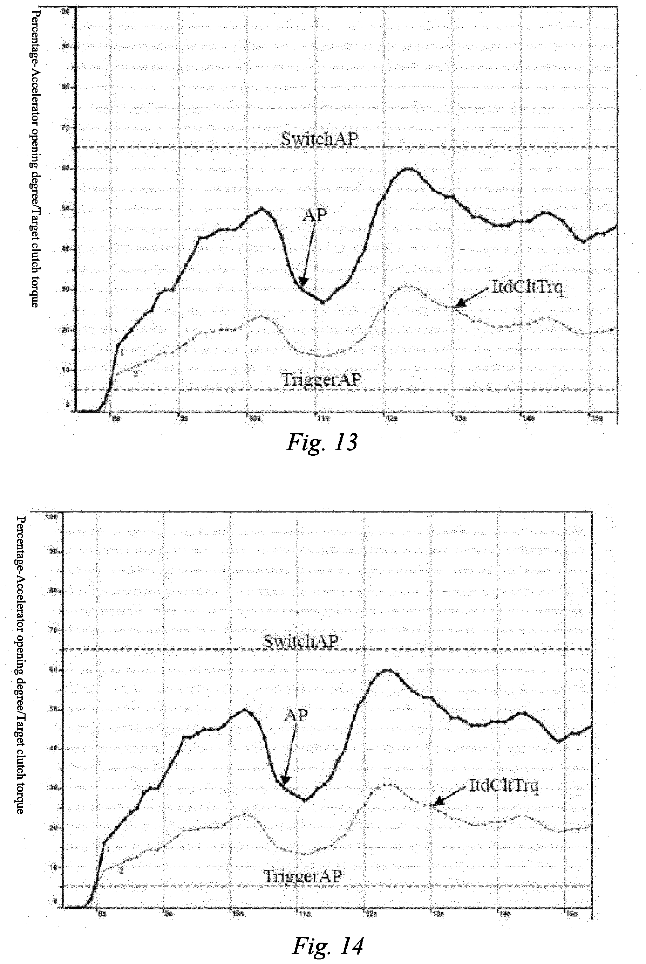

Step 1: the target torque calculation module calculates the driver target clutch torque ItdCltTrq according to the accelerator pedal position by means of the curve shown in Fig. 5. Fig. 5 illustrates the curve for calculating the driver target clutch torque according to the accelerator pedal position. The curve is determined by means of experimental calibration, so as to implement different system sensitivity responses in different accelerator opening degrees. When the driver presses down on the accelerator to a position that exceeds the trigger position TriggerAP (5 % of accelerator stroke), the driver target clutch torque slowly increases along with the increase in the accelerator stroke. As shown in Fig. 13, when the accelerator position exceeds the trigger position TriggerAP, but does not reach a switch position SwitchAP (65 % of the accelerator stroke), the driver target clutch torque ItdCltTrq is calculated by means of the curve shown in Fig. 5, and the driver target clutch torque ItdCltTrq proportionally changes within a range of 0 %-35 % of a rated engine torque. When the accelerator position reaches the switch position SwitchAP, the driver target clutch torque rapidly increases along with the increase in the accelerator stroke. As shown in Fig. 14, when the accelerator position exceeds the switch position SwitchAP (65 % of the accelerator stroke), but does not reach 100% of the accelerator position, the driver target clutch torque ItdCltTrq is calculated by means of the curve shown in Fig. 5, and the driver target clutch torque ItdCltTrq proportionally changes within a range of 35 %-50 % of the rated engine torque. When the accelerator position reaches 100 % of the accelerator position, the driver target clutch torque reaches the available torque corresponding to an optimal transient engine speed. The optimal transient engine speed and the available torque corresponding thereto are obtained by means of experimental calibration of the engine. For a heavy pressurized diesel engine, under the effects of both an external characteristic limitation and a smoke intensity limitation, the maximum transient torque reachable for the engine varies according to different speeds. The maximum transient available torque is limited by an external characteristic when the speed is relatively low. The maximum transient available torque is limited by smoke intensity control when the speed is relatively high. The transient available torque reaches a maximum value under the optimal transient speed. Therefore, in a creep operating condition in which the engine needs to respond quickly, a maximum value of the target clutch torque curve is set to the available torque corresponding to the optimal transient speed.

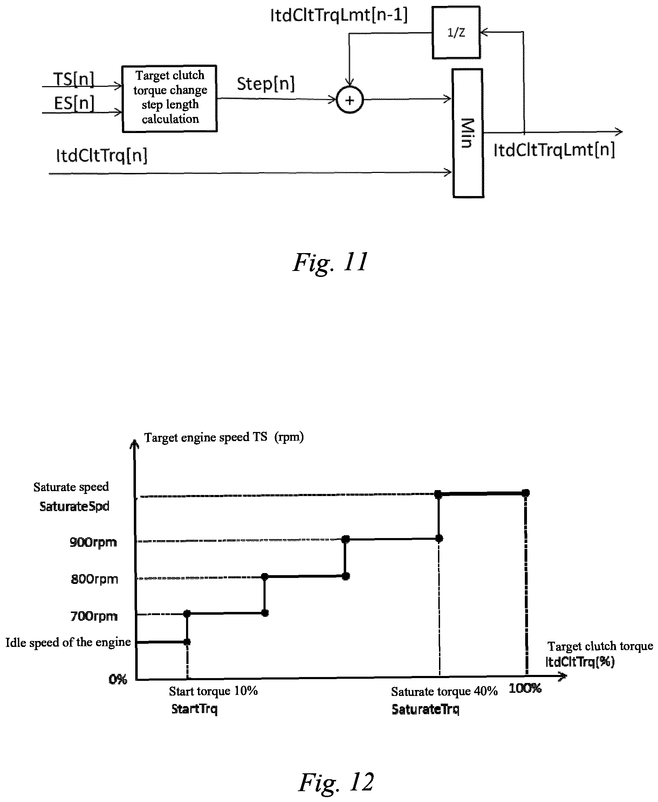

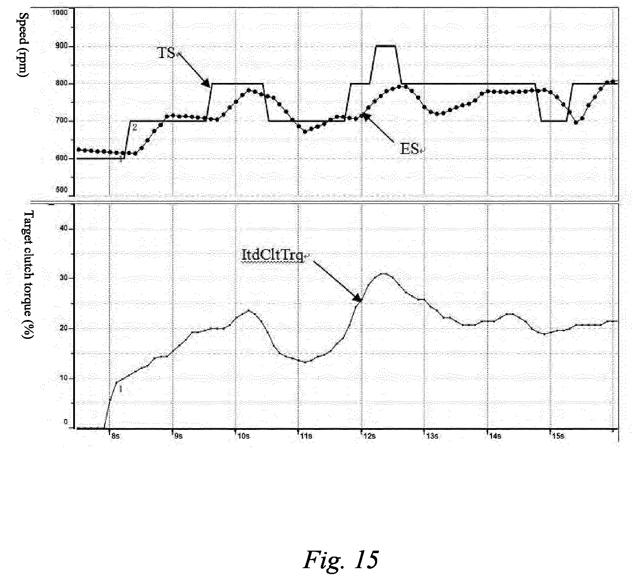

Step 2: an engine speed controller calculates a corresponding target engine speed TS according to the driver target clutch torque ltdCltTrq by means of the pre-calibrated curve shown in Fig. 12. Fig. 12 illustrates the curve for calculating the target engine speed according to the target clutch torque, wherein the curve is obtained by means of experimental calibration according to an engine speed controller performance. In the curve, the required torque output by the engine speed controller basically corresponds to a speed difference required by a proportional control link. As shown in Fig. 12 and Fig. 15, when the target clutch torque is less than a starting torque StartTrq, the target engine speed is kept at an idle speed. The target engine speed gradually increases along with the increase in the target clutch torque, and the target engine speed reaches a saturated speed SaturateSpd when the target clutch torque reaches a saturated torque SaturateTrq. Specifically, the target engine speed TS increases by 100 rpm each time that the driver target clutch torque increases by 10 %. The starting torque StartTrq, the saturated torque SaturateTrq, and the saturated speed SaturateSpd are all determined by means of calibration according to the engine speed controller performance.

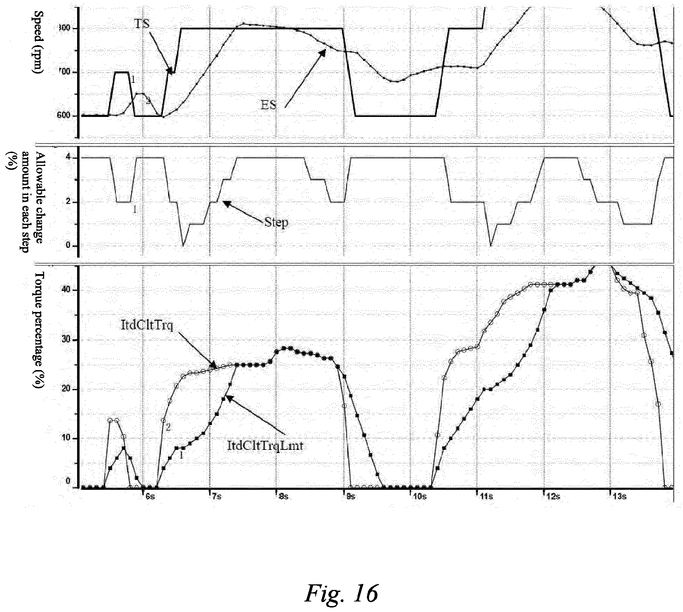

Step 3: the change rate limitation module calculates an allowable clutch torque change rate according to a difference between the target engine speed TS calculated in step 2 and the current engine speed ES, that is, an allowable clutch torque change difference for one step length, and limits the currently calculated driver target clutch torque, and as shown in Fig. 11, the target clutch torque obtained after the limitation is ltdCltTrqLmt. In Fig. 11, TS[n] is a target engine speed of a current calculation step, ES[n] is the actual engine speed of the current calculation step, ltdCltTrq[n] is a target clutch torque of the current calculation step, ltdCltTrqLmt[n-1] is a limited target clutch torque of the last calculation step, ltdCltTrqLmt[n] is a limited target clutch torque of the current calculation step obtained by a final calculation, Step[n] is an allowable clutch-transmitted torque change amount of the current calculation step, Min represents the searching of a minimum value between two input signals, and 1/Z represents temporarily storing a calculation result of the last step. Fig. 16 illustrates a change state curve diagram of the target engine speed TS, the current engine speed ES, a clutch-transmitted torque change amount Step, a limited target clutch torque, and the driver target clutch torque ltdCltTrq. It can be seen from Fig. 16 that the change rate limitation module calculates the allowable clutch-transmitted torque change amount Step at a corresponding calculation point according to the difference between TS and ES, and a change amount of the limited target clutch torque in each calculation step cannot exceed the allowable torque change amount Step at the corresponding calculation point.

Step 4: the transmission control unit TCU calculates the target clutch position ICP according to the limited target clutch torque ltdCltTrqLmt by means of performing interpolation on a clutch torque transmission curve shown in Fig. 6. The TCU directly controls the inlet pressure of the clutch power cylinder to implement control on the target clutch position. Fig. 6 illustrates a curve for calculating the target clutch position according to a filtered driver target clutch torque. The curve reflects a change in the maximum torque that can be transmitted by the clutch in different strokes, and the curve is obtained by means of automatic transmission AMT software algorithm self-identification in a normal starting and traveling process of the vehicle. The clutch does not transmit torque before the clutch position reaches the clutch kiss point KP. From the clutch kiss point KP position, the maximum torque that can be transmitted by the clutch gradually increases, and when the clutch engages more deeply, a change rate of the maximum torque that can be transmitted by the clutch becomes larger along with the change in the position.

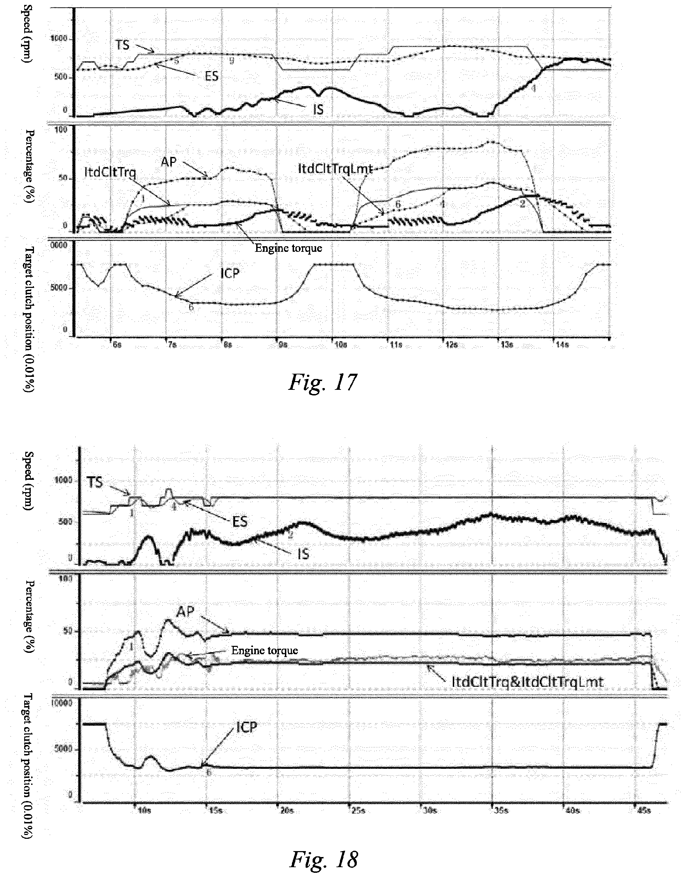

Fig. 17 illustrates a change state curve diagram of the clutch torque and the engine speed in an operating condition of quickly pressing down on and quickly lifting off an accelerator. Fig. 18 illustrates a change state curve diagram of the clutch torque and the engine speed in an operating condition of stable accelerator creep implemented according to the control method of the present invention. It can be found by comparing Fig. 17 and Fig. 18 that, controlling the clutch position according to the clutch torque transmission curve of the present invention can ensure that the driver can stably and linearly control the clutch torque and the vehicle speed.

The portion of the present invention which is not described herein can be implemented by adopting or referring to the prior art.

The specific embodiments described in the text are merely descriptive examples of the present invention.

## Claims

1.  A target clutch torque-based creep control system for an automatic transmission of a heavy truck, wherein

    the control system comprises an internal combustion engine controlled by an engine control unit (ECU) having a speed closed-loop control function, and a clutch power cylinder, a transmission actuator, and a vehicle transmission system which are controlled by a transmission control unit (TCU); wherein

the engine control unit (ECU) collects an accelerator pedal position signal (AP), a brake switch signal (BK), and a current engine speed (ES), and the transmission control unit (TCU) collects a clutch position signal (ACP), a transmission input shaft speed (IS), a transmission output shaft speed (OS), and a direction of travel of vehicle; the engine control unit (ECU) and the transmission control unit (TCU) are connected to each other by means of a data communication bus, and the ECU sends the measured accelerator pedal position signal (AP), the brake switch signal (BK), and the current engine speed (ES) to the transmission control unit (TCU) by means of the data communication bus; and

a target torque calculation module, for calculating a driver target clutch torque (ItdCltTrq) according to the accelerator pedal position signal (AP), and a change rate limitation module, for determining an allowable clutch torque change rate, are added to the transmission control unit (TCU); and

a clutch synchronization check sub-module, a vehicle coasting check sub-module, and a clutch overheating check sub-module are added to the transmission control unit (TCU), and the transmission control unit (TCU) implements vehicle creep control according to an output signal of each sub-module; the vehicle creep control performed by the transmission control unit (TCU) comprises a creep control mode in a waiting state, a creep control mode in a hybrid accelerator state, a creep control mode in a positive engagement state, and a creep control mode in a synchronization state, and switching between the various different control modes is determined by means of a current vehicle state;

wherein the transmission control unit (TCU) obtains a target engine speed (TS) and a target clutch position (ICP) in different vehicle states by means of the vehicle creep control; and the transmission control unit (TCU) sends the target engine speed (TS) to the engine control unit (ECU) by means of the data communication bus; and the engine control unit (ECU) controls a fuel injection quantity according to the received target engine speed (TS) and the current engine speed (ES) so as to implement engine speed closed-loop control; and the transmission control unit (TCU) adjusts, by means of the target clutch position (ICP), a clutch-transmitted torque applied to an engine flywheel, wherein the vehicle coasting check sub-module checks whether the vehicle is in a coasting state (Ovrn) in real time according to the current engine speed (ES), the transmission input shaft speed (IS), a current gear, and the direction of travel of vehicle; and

when the vehicle is coasting, the vehicle coasting check sub-module outputs a "Ovrn = 1"-signal (Ovrn = 1); and when the vehicle is not coasting, the vehicle coasting check sub-module outputs a "Ovrn = 0"-signal (Ovrn = 0); and the target clutch torque-based creep control system is **characterized in that** when the vehicle creep control performed by the transmission control unit (TCU) is in the creep control mode in a hybrid accelerator state, if the vehicle coasting check sub-module outputs the "Ovrn = 1"-signal, that is, the vehicle is in the coasting state (Ovrn = 1), the vehicle creep control performed by the transmission control unit (TCU) switches from the creep control mode in a hybrid accelerator state to the creep control mode in a positive engagement state.

2. The target clutch torque-based creep control system for an automatic transmission of a heavy truck as claimed in claim 1, **characterized in that**

the clutch synchronization check sub-module checks a synchronization state (Sync) between the engine and the clutch in real time according to the current engine speed (ES), the transmission input shaft speed (IS), the current clutch position signal (ACP), and a clutch kiss point position (KP);

when the engine and the clutch are synchronized, the clutch synchronization checks sub-module outputs a "Sync = 1"-signal (Sync = 1); and when the engine and the clutch are desynchronized, the clutch synchronization check sub-module outputs a "Sync = 0"-signal (Sync = 0).

3. The target clutch torque-based creep control system for an automatic transmission of a heavy truck as claimed in claim 1, **characterized in that**

a clutch temperature estimation module used to estimate a current clutch temperature is disposed in the transmission control unit (TCU), the clutch temperature estimation module is configured with an alarm temperature threshold and a protection temperature threshold, and the clutch overheating check sub-module determines a heat state (OH) of the clutch by comparing an estimated temperature obtained from the clutch temperature estimation module, the alarm temperature threshold, and the protection temperature threshold;

when the estimated temperature exceeds the set alarm temperature threshold, the clutch switches from a normal state to an alarm state, and in this case, the clutch overheating check sub-module outputs a "OH = 1"-signal (OH = 1);

when the clutch is in the alarm state, if the estimated temperature continues to rise and exceeds the protection temperature threshold, the heat state of the clutch switches from the alarm state to a protection state, and in this case, the clutch overheating check sub-module outputs a "OH = 2"-signal (OH = 2);

when the clutch is in the protection state, if the estimated temperature drops, the heat state of the clutch does not switch to the alarm state until the estimated temperature drops below the alarm temperature threshold; and when the clutch is in the alarm state, if the estimated temperature drops and the estimated temperature drops below 60°C, the heat state of the clutch switches to the normal state, and in this case, the clutch overheating check sub-module outputs a "OH = 0"-signal (OH = 0).

4. The target clutch torque-based creep control system for an automatic transmission of a heavy truck as claimed in claim 3, **characterized in that**

an alarm module is further disposed in the transmission control unit (TCU), the alarm module is connected to the clutch overheating check sub-module, the alarm module comprises a buzzing alarm, and a buzzing frequency of the buzzing alarm is set to cooperate with the clutch temperature, that is, the buzzing frequency is higher when the clutch temperature is higher; and

when the heat state of the clutch is in the alarm state, in the creep control mode in a hybrid accelerator state, the transmission control unit (TCU) can still implement creep control on the clutch, but the transmission control unit (TCU) sends a buzzing alarm to warn a driver that the clutch is about to overheat, and in a range from the alarm temperature threshold to the protection temperature threshold, the buzzing frequency is higher when the temperature is higher.

5. The target clutch torque-based creep control system for an automatic transmission of a heavy truck as claimed in claim 1, **characterized in that**:

when the vehicle enters into a creep mode, the vehicle creep control performed by the transmission control unit (TCU) enters into the creep control mode in a waiting state by default; and

when the vehicle creep control performed by the transmission control unit (TCU) is in the creep control mode in a waiting state, if the vehicle coasting check sub-module outputs the "Ovrn = 1"-signal, that is, the vehicle is in the coasting state (Ovrn = 1), the vehicle creep control performed by the transmission control unit (TCU) preferentially switches from the creep control mode in a waiting state to the creep control mode in a positive engagement state.

6. The target clutch torque-based creep control system for an automatic transmission of a heavy truck as claimed in claim 3, **characterized in that**:

when the vehicle creep control performed by the transmission control unit (TCU) is in the creep control mode in a waiting state, if a driver presses down on the accelerator to a position that exceeds a set accelerator position, and the clutch overheating check sub-module outputs the "OH = 0"-signal, that is, the heat state of the clutch is in the normal state (OH = 0), the vehicle creep control performed by the transmission control unit (TCU) switches from the creep control mode in a waiting state to the creep control mode in a hybrid accelerator state.

7. The target clutch torque-based creep control system for an automatic transmission of a heavy truck as claimed in claim 3, **characterized in that**:

when the vehicle creep control performed by the transmission control unit (TCU) is in the creep control mode in a hybrid accelerator state, if the clutch overheating check sub-module outputs the "OH = 2"-signal , that is, the heat state of the clutch is in the protection state (OH = 2), the vehicle creep control performed by the transmission control unit (TCU) switches to a corresponding state according to the situation of a speed difference (ES - IS) between the current engine speed (ES) and the transmission input shaft speed (IS), that is if the speec difference (ES - IS) between the current engine speed (ES) and the transmission input shaft speed (IS) is smaller than 200 rpm (ES - IS < 200 rpm), the vehicle creep control performed by the transmission control unit (TCU) switches from the creep control mode in a hybrid accelerator state to the creep control mode in a positive engagement state; and if the speed difference (ES - IS) between the current engine speed (ES) and the transmission input shaft speed (IS) is larger than 200 rpm (ES - IS < 200 rpm), the vehicle creep control performed by the transmission control unit (TCU) switches from the creep control mode in a hybrid accelerator state to the creep control mode in a waiting state.

8. The target clutch torque-based creep control system for an automatic transmission of a heavy truck as claimed in claim 2, **characterized in that**:

when the vehicle creep control performed by the transmission control unit (TCU) is in the creep control mode in a hybrid accelerator state, if the clutch synchronization check sub-module outputs the "Sync = 1"-signal, that is, when the engine and the clutch are synchronized (Sync = 1), the vehicle creep control performed by the transmission control unit (TCU) switches from the creep control mode in a hybrid accelerator state to the creep control mode in a synchronization state.

9. The target clutch torque-based creep control system for an automatic transmission of a heavy truck as claimed in claim 2, **characterized in that**:
   when the vehicle creep control performed by the transmission control unit (TCU) is in the creep control mode in a positive engagement state, if the clutch synchronization check sub-module outputs the "Sync = 1"-signal, the vehicle creep control performed by the transmission control unit (TCU) switches from the creep control mode in a positive engagement state to the creep control mode in a synchronization state.

10. The target clutch torque-based creep control system for an automatic transmission of a heavy truck as claimed in claim 2, **characterized in that**:
    when the vehicle creep control performed by the transmission control unit (TCU) is in the creep control mode in a synchronization state, if the clutch synchronization check sub-module outputs the "Sync = 0"-signal, that is, the engine and the clutch are desynchronized (Sync = 0), or a driver presses down on a brake pedal, the vehicle creep control performed by the transmission control unit (TCU) switches from the creep control mode in a synchronization state to the creep control mode in a hybrid accelerator state.

11. The target clutch torque-based creep control system for an automatic transmission of a heavy truck as claimed in any one of claims 1 to10, **characterized in that**:

    when the vehicle creep control performed by the transmission control unit (TCU) is in the creep control mode in a waiting state, the target clutch position (ICP) is constantly set to a clutch kiss point position (KP), that is,

    $$ICP = KP,$$

    wherein ICP is the target clutch position and KP is the clutch kiss point position, and
    the target engine speed (TS) is constantly set to an idle speed of the engine, that is,

    TS = IS, wherein
    TS is the target engine speed and IS is the idle speed of the engine.

12. The target clutch torque-based creep control system for an automatic transmission of a heavy truck as claimed in any one of claims 1 to 10, **characterized in that**

    when the vehicle creep control performed by the transmission control unit (TCU) is in the creep control mode in a positive engagement state, the target clutch position (ICP) positively engages at a fixed speed, that is,

    $$ICP[n] = ICP[n-1] - CP\_stp,$$

    wherein ICP[n] is a target clutch position (ICP) of a current calculation step, ICP[n-1] is a target clutch position (ICP) of the last calculation step temporarily stored in the transmission control unit (TCU), and
    CP_stp is a calibrated clutch engagement position for each step length in the positive engagement state; and

    the target engine speed (TS) is maintained at the setting of the target engine speed prior to enabling of the positive engagement state.

13. The target clutch torque-based creep control system for an automatic transmission of a heavy truck as claimed in any one of claims 2 to 10, **characterized in that**

    when the vehicle creep control performed by the transmission control unit (TCU) is in the creep control mode in a synchronization state, the target clutch position (ICP) freezes at a clutch position value (ICP[Sync0]) at which the synchronization state was enabled and remains unchanged, and

the transmission control unit (TCU) is configured to record a target engine speed value (TS[Sync0]) and an accelerator position value (AP[Sync0]) at the enabling of the synchronization state, and to calculate a target engine speed in the synchronization state by means of the following formula:

$$TS = Max((1600 - TS[Sync0])/(100 - AP[Sync0]) \times (AP - AP[Sync0]),600),$$

wherein

TS is the target engine speed,
AP is the accelerator pedal position signal,
AP[Sync0] is the accelerator position value,
TS[Sync0] is the target engine speed value, and
ICP[Sync0] is the clutch position value.

14. The target clutch torque-based creep control system for an automatic transmission of a heavy truck as claimed in any one of claims 1 to 10, **characterized in that**
when the vehicle creep control performed by the transmission control unit (TCU) is in the creep control mode in a hybrid accelerator state, the target engine speed (TS) and the target clutch position (ICP) are dynamically adjusted according to the following steps, wherein

- in a first step the target torque calculation module calculates the driver target clutch torque (ItdCltTrq) according to the accelerator pedal position;
- in a second step an engine speed controller calculates a corresponding target engine speed (TS) according to the driver target clutch torque (ItdCltTrq);
- in a third step the change rate limitation module calculates an allowable clutch torque change rate according to a difference between the target engine speed (TS) calculated in the second step and the current engine speed (ES), that is, an allowable clutch torque change difference for one step length, and limits the currently calculated driver target clutch torque, wherein a target clutch torque obtained after the limitation is a limited target clutch torque (ItdCltTrqLmt); and
- in a fourth step the transmission control unit (TCU) calculates the target clutch position (ICP) according to the limited target clutch torque (ItdCltTrqLmt) by means of performing interpolation on a clutch torque transmission curve.

**Patentansprüche**

1. Sollkupplungsdrehmoment-basiertes Kriechsteuersystem für ein Automatikgetriebe eines Schwerlastkraftwagens, wobei

das Steuersystem einen Verbrennungsmotor, der durch eine Motorsteuereinheit (ECU) gesteuert wird, die eine Drehzahlregelungsfunktion aufweist, und einen Kupplungskraftzylinder, einen Getriebeaktuator und ein Fahrzeuggetriebesystem, die durch eine Getriebesteuereinheit (TCU) gesteuert werden, umfasst; wobei die Motorsteuereinheit (ECU) ein Gaspedalpositionssignal (AP), ein Bremsschaltsignal (BK) und eine aktuelle Motordrehzahl (ES) erfasst und die Getriebesteuereinheit (TCU) ein Kupplungspositionssignal (ACP), eine Getriebeeingangswellendrehzahl (IS), eine Getriebeausgangswellendrehzahl (OS) und eine Fahrtrichtung des Fahrzeugs erfasst; wobei die Motorsteuereinheit (ECU) und die Getriebesteuereinheit (TCU) mittels eines Datenkommunikationsbusses miteinander verbunden sind und die ECU das gemessene Gaspedalpositionssignal (AP), das Bremsschaltsignal (BK) und die aktuelle Motordrehzahl (ES) an die Getriebesteuereinheit (TCU) mittels des Datenkommunikationsbusses sendet; und
ein Solldrehmomentberechnungsmodul zum Berechnen eines Fahrersollkupplungsdrehmoments (ItdCltTrq) gemäß dem Gaspedalpositionssignal (AP) und ein Änderungsratenbegrenzungsmodul zum Bestimmen einer zulässigen Kupplungsdrehmomentänderungsrate der Getriebesteuereinheit (TCU) hinzugefügt sind; und
ein Kupplungssynchronisationsprüfungsuntermodul, ein Fahrzeugschubbetriebprüfungsuntermodul und ein Kupplungsüberhitzungsprüfungsuntermodul zu der Getriebesteuereinheit (TCU) hinzugefügt sind und die Getriebesteuereinheit (TCU) eine Fahrzeugkriechsteuerung gemäß einem Ausgangssignal jedes Untermoduls implementiert; wobei die durch die Getriebesteuereinheit (TCU) durchgeführte Fahrzeugkriechsteuerung einen Kriechsteuermodus in einem Wartezustand, einen Kriechsteuermodus in einem hybriden Gaspedalzustand, einen Kriechsteuermodus in einem formschlüssigen Eingriffszustand und einen Kriechsteuermodus in einem Synchronisationszustand umfasst, und wobei ein Umschalten zwischen den verschiedenen unterschiedlichen Steuermodi mittels eines aktuellen Fahrzeugzustands bestimmt wird;

wobei die Getriebesteuereinheit (TCU) eine Sollmotordrehzahl (TS) und eine Sollkupplungsposition (ICP) in unterschiedlichen Fahrzeugzuständen mittels der Fahrzeugkriechsteuerung erhält; und die Getriebesteuereinheit (TCU) die Sollmotordrehzahl (TS) an die Motorsteuereinheit (ECU) mittels des Datenkommunikationsbusses sendet; und

wobei die Motorsteuereinheit (ECU) eine Kraftstoffeinspritzmenge gemäß der empfangenen Sollmotordrehzahl (TS) und der aktuellen Motordrehzahl (ES) steuert, um eine Motordrehzahlregelung zu implementieren; und die Getriebesteuereinheit (TCU) mittels der Sollkupplungsposition (ICP) ein durch die Kupplung übertragenes, auf ein Motorschwungrad aufgebrachtes Drehmoment anpasst, wobei das Fahrzeugschubbetriebprüfungsuntermodul in Echtzeit gemäß der aktuellen Motordrehzahl (ES), der Getriebeeingangswellendrehzahl (IS), einem aktuellen Gang und der Fahrtrichtung des Fahrzeugs prüft, ob sich das Fahrzeug in einem Schubbetriebszustand (Ovrn) befindet; und

wobei, wenn sich das Fahrzeug in einem Schubbetrieb befindet, das Fahrzeugschubbetriebprüfungsuntermodul ein "Ovrn = 1"-Signal (Ovrn = 1) ausgibt; und wenn sich das Fahrzeug nicht in einem Schubbetrieb befindet, das Fahrzeugschubbetriebprüfungsuntermodul ein "Ovrn = 0"-Signal (Ovrn = 0) ausgibt; und das Sollkupplungsdrehmoment-basierte Kriechsteuersystem **dadurch gekennzeichnet ist, dass**

wenn die durch die Getriebesteuereinheit (TCU) durchgeführte Fahrzeugkriechsteuerung in dem Kriechsteuermodus in einem hybriden Gaspedalzustand ist, falls das Fahrzeugschubbetriebprüfungsuntermodul das "Ovrn = 1"-Signal ausgibt, das heißt, sich das Fahrzeug in dem Schubbetriebszustand (Ovrn = 1) befindet, die durch die Getriebesteuereinheit (TCU) durchgeführte Fahrzeugkriechsteuerung von dem Kriechsteuermodus in einem hybriden Gaspedalzustand in den Kriechsteuermodus in einem formschlüssigen Eingriffszustand umschaltet.

2. Sollkupplungsdrehmoment-basiertes Kriechsteuersystem für ein Automatikgetriebe eines Schwerlastkraftwagens nach Anspruch 1, **dadurch gekennzeichnet, dass**

das Kupplungssynchronisationsprüfungsuntermodul einen Synchronisationszustand (Sync) zwischen dem Motor und der Kupplung in Echtzeit gemäß der aktuellen Motordrehzahl (ES), der Getriebeeingangswellendrehzahl (IS), dem aktuellen Kupplungspositionssignal (ACP) und einer Kupplungskontaktpunktposition (KP) prüft; wenn der Motor und die Kupplung synchronisiert sind, das Kupplungssynchronisationsprüfungsuntermodul ein "Sync = 1"-Signal (Synch = 1) ausgibt; und wenn der Motor und die Kupplung desynchronisiert sind, das Kupplungssynchronisationsprüfungsuntermodul ein "Sync = 0"-Signal (Synch = 0)ausgibt.

3. Sollkupplungsdrehmoment-basiertes Kriechsteuersystem für ein Automatikgetriebe eines Schwerlastkraftwagens nach Anspruch 1, **dadurch gekennzeichnet, dass**

ein Kupplungstemperaturschätzmodul, das verwendet wird, um eine aktuelle Kupplungstemperatur zu schätzen, in der Getriebesteuereinheit (TCU) angeordnet ist, wobei das Kupplungstemperaturschätzmodul mit einem Temperaturalarmschwellenwert und einem Temperaturschutzschwellenwert ausgelegt ist, und das Kupplungsüberhitzungsprüfungsuntermodul einen Wärmezustand (OH) der Kupplung durch Vergleichen einer von dem Kupplungstemperaturschätzmodul erhaltenen geschätzten Temperatur, des Temperaturalarmschwellenwerts und des Temperaturschutzschwellenwerts bestimmt; wenn die geschätzte Temperatur den eingestellten Temperaturalarmschwellenwert übersteigt, die Kupplung von einem normalen Zustand in einen Alarmzustand umschaltet, und in diesem Fall das Kupplungsüberhitzungsprüfungsuntermodul ein "OH = 1"-signal (OH = 1) ausgibt; wenn sich die Kupplung in dem Alarmzustand befindet, falls die geschätzte Temperatur weiter steigt und den Temperaturschutzschwellenwert übersteigt, der Wärmezustand der Kupplung von dem Alarmzustand in einen Schutzzustand umschaltet, und in diesem Fall das Kupplungsüberhitzungsprüfungsuntermodul ein "OH = 2"-signal (OH = 2) ausgibt; wenn sich die Kupplung in dem Schutzzustand befindet, falls die geschätzte Temperatur fällt, der Wärmezustand der Kupplung nicht in den Alarmzustand umschaltet, bis die geschätzte Temperatur unter den Temperaturalarmschwellenwert fällt; und wenn sich die Kupplung in dem Alarmzustand befindet, falls die geschätzte Temperatur fällt und die geschätzte Temperatur unter 60 °C fällt, der Wärmezustand der Kupplung in den normalen Zustand umschaltet, und in diesem Fall das Kupplungsüberhitzungsprüfungsuntermodul ein "OH = 0"-Signal (OH = 0) ausgibt.

4. Sollkupplungsdrehmoment-basiertes Kriechsteuersystem für ein Automatikgetriebe eines Schwerlastkraftwagens nach Anspruch 3, **dadurch gekennzeichnet, dass**

ein Alarmmodul ferner in der Getriebesteuereinheit (TCU) angeordnet ist, wobei das Alarmmodul mit dem Kupplungsüberhitzungsprüfungsuntermodul verbunden ist, wobei das Alarmmodul einen Summeralarm umfasst und eine Summerfrequenz des Summeralarms so eingestellt ist, dass sie mit der Kupplungstemperatur zusammenwirkt, das heißt, die Summerfrequenz ist höher, wenn die Kupplungstemperatur höher ist; und
wenn der Wärmezustand der Kupplung in dem Alarmzustand ist, in dem Kriechsteuermodus in einem hybriden Gaspedalzustand die Getriebesteuereinheit (TCU) immer noch eine Kriechsteuerung an der Kupplung implementieren kann, jedoch die Getriebesteuereinheit (TCU) einen Summeralarm sendet, um einen Fahrer zu warnen, dass die Kupplung sich gerade überhitzt, und wobei in einem Bereich von dem Temperaturalarmschwellenwert zu dem Temperaturschutzschwellenwert die Summerfrequenz höher ist, wenn die Temperatur höher ist.

5. Sollkupplungsdrehmoment-basiertes Kriechsteuersystem für ein Automatikgetriebe eines Schwerlastkraftwagens nach Anspruch 1, **dadurch gekennzeichnet, dass**:

wenn das Fahrzeug in einen Kriechmodus eintritt, die durch die Getriebesteuereinheit (TCU) durchgeführte Fahrzeugkriechsteuerung standardmäßig in den Kriechsteuermodus in einem Wartezustand eintritt; und
wenn die durch die Getriebesteuereinheit (TCU) durchgeführte Fahrzeugkriechsteuerung in dem Kriechsteuermodus in einem Wartezustand ist, falls das Fahrzeugschubbetriebprüfungsuntermodul das "Ovrn = 1"-Signal ausgibt, das heißt, das Fahrzeug sich in dem Schubbetriebszustand (Ovrn = 1) befindet, die durch die Getriebesteuereinheit (TCU) durchgeführte Fahrzeugkriechsteuerung vorzugsweise von dem Kriechsteuermodus in einem Wartezustand in den Kriechsteuermodus in einem formschlüssigen Eingriffszustand umschaltet.

6. Sollkupplungsdrehmoment-basiertes Kriechsteuersystem für ein Automatikgetriebe eines Schwerlastkraftwagens nach Anspruch 3, **dadurch gekennzeichnet, dass**:
wenn die durch die Getriebesteuereinheit (TCU) durchgeführte Fahrzeugkriechsteuerung in dem Kriechsteuermodus in einem Wartezustand ist, falls ein Fahrer das Gaspedal zu einer Position niederdrückt, die eine eingestellte Gaspedalposition übersteigt, und das Kupplungsüberhitzungsprüfungsuntermodul das "OH = 0"-Signal ausgibt, das heißt, der Wärmezustand der Kupplung in dem normalen Zustand (OH = 0) ist, die durch die Getriebesteuereinheit (TCU) durchgeführte Fahrzeugkriechsteuerung von dem Kriechsteuermodus in einem Wartezustand in den Kriechsteuermodus in einem hybriden Gaspedalzustand umschaltet.

7. Sollkupplungsdrehmoment-basiertes Kriechsteuersystem für ein Automatikgetriebe eines Schwerlastkraftwagens nach Anspruch 3, **dadurch gekennzeichnet, dass**:
wenn die durch die Getriebesteuereinheit (TCU) durchgeführte Fahrzeugkriechsteuerung in dem Kriechsteuermodus in einem hybriden Gaspedalzustand ist, falls das Kupplungsüberhitzungsprüfungsuntermodul das "OH = 2"-Signal ausgibt, das heißt, der Wärmezustand der Kupplung in dem Schutzzustand (OH = 2) ist, die durch die Getriebesteuereinheit (TCU) durchgeführte Fahrzeugkriechsteuerung in einen entsprechenden Zustand gemäß der Situation einer Drehzahldifferenz (ES - IS) zwischen der aktuellen Motordrehzahl (ES) und der Getriebeeingangswellendrehzahl (IS) umschaltet, das heißt, falls die Drehzahldifferenz (ES - IS) zwischen der aktuellen Motordrehzahl (ES) und der Getriebeeingangswellendrehzahl kleiner als 200 U/min (ES - IS < 200 U/min) ist, die durch die Getriebesteuereinheit (TCU) durchgeführte Fahrzeugkriechsteuerung von dem Kriechsteuermodus in einem hybriden Gaspedalzustand in den Kriechsteuermodus in einem formschlüssigen Eingriffszustand umschaltet; und falls die Drehzahldifferenz (ES - IS) zwischen der aktuellen Motordrehzahl (ES) und der Getriebeeingangswellendrehzahl (IS) größer als 200 U/min (ES - IS < 200 U/min) ist, die durch die Getriebesteuereinheit (TCU) durchgeführte Fahrzeugkriechsteuerung von dem Kriechsteuermodus in einem hybriden Gaspedalzustand in den Kriechsteuermodus in einem Wartezustand umschaltet.

8. Sollkupplungsdrehmoment-basiertes Kriechsteuersystem für ein Automatikgetriebe eines Schwerlastkraftwagens nach Anspruch 2, **dadurch gekennzeichnet, dass**:
wenn die durch die Getriebesteuereinheit (TCU) durchgeführte Fahrzeugkriechsteuerung in dem Kriechsteuermodus in einem hybriden Gaspedalzustand ist, falls das Kupplungssynchronisationsprüfungsuntermodul das "Sync = 1"-Signal ausgibt, das heißt, wenn der Motor und die Kupplung synchronisiert (Sync = 1) sind, die durch die Getriebesteuereinheit (TCU) durchgeführte Fahrzeugkriechsteuerung von dem Kriechsteuermodus in einem hybriden Gaspedalzustand in den Kriechsteuermodus in einem Synchronisationszustand umschaltet.

9. Sollkupplungsdrehmoment-basiertes Kriechsteuersystem für ein Automatikgetriebe eines Schwerlastkraftwagens nach Anspruch 2, **dadurch gekennzeichnet, dass**:
wenn die durch die Getriebesteuereinheit (TCU) durchgeführte Fahrzeugkriechsteuerung in dem Kriechsteuermodus in einem formschlüssigen Eingriffszustand ist, falls das Kupplungssynchronisationsprüfungsuntermodul das "Sync = 1"-Signal ausgibt, die durch die Getriebesteuereinheit (TCU) durchgeführte Fahrzeugkriechsteuerung von dem Kriechsteuermodus in einem formschlüssigen Eingriffszustand in den Kriechsteuermodus in einem Synchronisationszustand umschaltet.

10. Sollkupplungsdrehmoment-basiertes Kriechsteuersystem für ein Automatikgetriebe eines Schwerlastkraftwagens nach Anspruch 2, **dadurch gekennzeichnet, dass**:
wenn die durch die Getriebesteuereinheit (TCU) durchgeführte Fahrzeugkriechsteuerung in dem Kriechsteuermodus in einem Synchronisationszustand ist, falls das Kupplungssynchronisationsprüfungsuntermodul das "Sync = 0"-Signal ausgibt, das heißt, wenn der Motor und die Kupplung desynchronisiert (Sync = 0) sind, oder ein Fahrer ein Bremspedal niederdrückt, die durch die Getriebesteuereinheit (TCU) durchgeführte Fahrzeugkriechsteuerung von dem Kriechsteuermodus in einem Synchronisationszustand in den Kriechsteuermodus in einem hybriden Gaspedalzustand umschaltet.

11. Sollkupplungsdrehmoment-basiertes Kriechsteuersystem für ein Automatikgetriebe eines Schwerlastkraftwagens nach einem der Ansprüche 1 bis 10, **dadurch gekennzeichnet, dass**:

wenn die durch die Getriebesteuereinheit (TCU) durchgeführte Fahrzeugkriechsteuerung in dem Kriechsteuermodus in einem Wartezustand ist, die Sollkupplungsposition (ICP) konstant auf eine Kupplungskontaktpunktposition (KP) eingestellt wird, das heißt,

$$ICP = KP,$$

wobei
ICP die Sollkupplungsposition ist und KP die Kupplungskontaktpunktposition ist, und
die Sollmotordrehzahl (TS) konstant auf eine Leerlaufdrehzahl des Motors eingestellt wird, das heißt,

$$TS = IS,$$

wobei
TS die Sollmotordrehzahl ist und IS die Leerlaufdrehzahl des Motors ist.

12. Sollkupplungsdrehmoment-basiertes Kriechsteuersystem für ein Automatikgetriebe eines Schwerlastkraftwagens nach einem der Ansprüche 1 bis 10, **dadurch gekennzeichnet, dass**

wenn die durch die Getriebesteuereinheit (TCU) durchgeführte Fahrzeugkriechsteuerung in dem Kriechsteuermodus in einem formschlüssigen Eingriffszustand ist, die Sollkupplungsposition (ICP) bei einer festgelegten Drehzahl formschlüssig eingreift, das heißt,

$$ICP[n] = ICP[n-1] - CP\_stp,$$

wobei

ICP[n] eine Sollkupplungsposition (ICP) eines aktuellen Berechnungsschritts ist, ICP[n-1] eine Sollkupplungsposition (ICP) des letzten Berechnungsschritts ist, die vorübergehend in der Getriebesteuereinheit (TCU) gespeichert wird, und
CP_stp eine kalibrierte Kupplungseingriffsposition für jede Schrittlänge in dem formschlüssigen Eingriffszustand ist; und

die Sollmotordrehzahl (TS) bei der Einstellung der Sollmotordrehzahl vor Aktivieren des formschlüssigen Eingriffszustands gehalten wird.

13. Sollkupplungsdrehmoment-basiertes Kriechsteuersystem für ein Automatikgetriebe eines Schwerlastkraftwagens nach einem der Ansprüche 2 bis 10, **dadurch gekennzeichnet, dass**

wenn die durch die Getriebesteuereinheit (TCU) durchgeführte Fahrzeugkriechsteuerung in dem Kriechsteuermodus in einem Synchronisationszustand ist, die Sollkupplungsposition (ICP) bei einem Kupplungspositionswert (ICP[Sync0]) eingefroren wird, bei dem der Synchronisationszustand aktiviert wurde, und unverändert bleibt, und

die Getriebesteuereinheit (TCU) dazu ausgelegt ist, einen Sollmotordrehzahlwert (TS[Sync0]) und einen Gaspedalpositionswert (AP[Sync0]) beim Aktivieren des Synchronisationszustands aufzuzeichnen und eine Sollmotordrehzahl in dem Synchronisationszustand mittels der folgenden Formel zu berechnen:

$$TS = Max((1600 - TS[Sync0])/(100 - AP[Sync0]) \times (AP - AP[Sync0]),600),$$

wobei

TS die Sollmotordrehzahl ist,
AP das Gaspedalpositionssignal ist,
AP[Sync0] der Gaspedalpositionswert ist,
TS[Sync0] der Sollmotordrehzahlwert ist, und
ICP[Sync0] der Kupplungspositionswert ist.

14. Sollkupplungsdrehmoment-basiertes Kriechsteuersystem für ein Automatikgetriebe eines Schwerlastkraftwagens nach einem der Ansprüche 1 bis 10, **dadurch gekennzeichnet, dass**

wenn die durch die Getriebesteuereinheit (TCU) durchgeführte Fahrzeugkriechsteuerung in dem Kriechsteuermodus in einem hybriden Gaspedalzustand ist, die Sollmotordrehzahl (TS) und die Sollkupplungsposition (ICP) dynamisch gemäß den folgenden Schritten angepasst werden, wobei

- in einem ersten Schritt das Solldrehmomentberechnungsmodul das Fahrersollkupplungsdrehmoment (ltdCltTrq) gemäß der Gaspedalposition berechnet;
- in einem zweiten Schritt eine Motordrehzahlsteuerung eine entsprechende Sollmotordrehzahl (TS) gemäß dem Fahrersollkupplungsdrehmoment (ltdClt-Trq) berechnet;
- in einem dritten Schritt das Änderungsratenbegrenzungsmodul eine zulässige Kupplungsdrehmomentänderungsrate gemäß einer Differenz zwischen der in dem zweiten Schritt berechneten Sollmotordrehzahl (TS) und der aktuellen Motordrehzahl (ES), das heißt, eine zulässige Kupplungsdrehmomentänderungsdifferenz für eine Schrittlänge, berechnet, und das aktuell berechnete Fahrersollkupplungsdrehmoment begrenzt, wobei ein nach der Begrenzung erhaltenes Sollkupplungsdrehmoment ein begrenztes Sollkupplungsdrehmoment (ltdCltTrqLmt) ist; und
- in einem vierten Schritt die Getriebesteuereinheit (TCU) die Sollkupplungsposition (ICP) gemäß dem begrenzten Sollkupplungsdrehmoment (ltdCltTrqLmt) mittels Durchführen einer Interpolation an einer Kupplungsdrehmomentübertragungskurve berechnet.

## Revendications

1. Système de commande de rampage basé sur un couple embrayage cible pour une transmission automatique d'un poids lourd,

le système de commande comprenant un moteur à combustion interne commandé par une unité de commande moteur (ECU) pourvue d'une fonction de commande de régime en boucle fermée, et un vérin d'embrayage, un actionneur de transmission et un système de transmission de véhicule qui sont commandés par une unité de commande transmission (TCU);
l'unité de commande moteur (ECU) collectant un signal de position de pédale d'accélérateur (AP), un signal d'interrupteur de frein (BK) et un régime moteur (ES) actuel, et l'unité de commande transmission (TCU) collectant un signal de position d'embrayage (ACP), un régime d'arbre primaire (IS) de transmission, un régime d'arbre secondaire (OS) de transmission et un sens de déplacement de véhicule ; l'unité de commande moteur (ECU) et l'unité de commande transmission (TCU) étant reliées entre elles au moyen d'un bus de communication de données, et l'ECU envoyant le signal de position de pédale d'accélérateur (AP) mesuré, le signal d'interrupteur de frein (BK) et le régime moteur (ES) actuel à l'unité de commande transmission (TCU) au moyen du bus de communication de données ; et

un module de calcul de couple cible, pour le calcul d'un couple embrayage cible conducteur (ltdCltTrq) selon le signal de position de pédale d'accélérateur (AP), et un module de limitation de taux de variation, pour la détermination d'un taux de variation admissible de couple embrayage, étant ajoutés à l'unité de commande transmission (TCU) ; et

un sous-module de contrôle de synchronisation d'embrayage, un sous-module de contrôle de marche au débrayé de véhicule et un sous-module de contrôle de surchauffe d'embrayage étant ajoutés à l'unité de commande transmission (TCU), et l'unité de commande transmission (TCU) mettant en œuvre une commande de rampage de véhicule selon un signal de sortie de chaque sous-module ; la commande de rampage de véhicule réalisée par l'unité de commande transmission (TCU) comprenant un mode de commande de rampage dans un état d'attente, un mode de commande de rampage dans un état d'accélérateur hybride, un mode de commande de rampage dans un état d'engagement positif et un mode de commande de rampage dans un état de synchronisation, et la commutation entre les divers modes de commande différents étant déterminée au moyen d'un état actuel de véhicule ;

l'unité de commande transmission (TCU) obtenant le régime moteur (TS) actuel et une position d'embrayage cible (ICP) dans des états différents de véhicule au moyen de la commande de rampage de véhicule ; et

l'unité de commande transmission (TCU) envoyant le régime moteur (TS) actuel à l'unité de commande moteur (ECU) au moyen du bus de communication de données ; et

l'unité de commande moteur (ECU) commandant une quantité d'injection de carburant selon le régime moteur cible (TS) reçu et le régime moteur (ES) actuel de manière à mettre en œuvre une commande de régime moteur en boucle fermée ; et l'unité de commande transmission (TCU) ajustant, au moyen de la position d'embrayage cible (ICP), un couple transmis par l'embrayage appliqué à un volant moteur,

le sous-module de contrôle de marche au débrayé de véhicule contrôlant si le véhicule est dans un état de marche au débrayé (Ovrn) en temps réel selon le régime moteur (ES) actuel, le régime d'arbre primaire (IS) de transmission, un rapport de vitesse actuel et le sens de déplacement de véhicule ; et

lorsque le véhicule marche au débrayé, le sous-module de contrôle de marche au débrayé de véhicule délivrant un signal "Ovrn = 1" (Ovrn = 1) ; et, lorsque le véhicule ne marche pas au débrayé, le sous-module de contrôle de marche au débrayé de véhicule délivrant un signal "Ovrn = 0" (Ovrn = 0) ; et le système de commande de rampage basé sur un couple embrayage cible étant **caractérisé en ce que**

lorsque la commande de rampage de véhicule réalisée par l'unité de commande transmission (TCU) est dans le mode de commande de rampage dans un état d'accélérateur hybride, si le sous-module de contrôle de marche au débrayé de véhicule délivre le signal "Ovrn = 1", autrement dit si le véhicule est dans l'état de marche au débrayé (Ovrn = 1), la commande de rampage de véhicule réalisée par l'unité de commande transmission (TCU) commute du mode de commande de rampage dans un état d'accélérateur hybride sur le mode de commande de rampage dans un état d'engagement positif.

2. Système de commande de rampage basé sur un couple embrayage cible pour une transmission automatique d'un poids lourd selon la revendication 1, **caractérisé en ce que**

le sous-module de contrôle de synchronisation d'embrayage contrôle un état de synchronisation (Sync) entre le moteur et l'embrayage en temps réel selon le régime moteur (ES) actuel, le régime d'arbre primaire (IS) de transmission, le signal de position d'embrayage (ACP) actuel et une position de point de léchage (KP) d'embrayage ;

lorsque le moteur et l'embrayage sont synchronisés, le sous-module de contrôle de synchronisation d'embrayage délivre un signal "Sync = 1" (Sync = 1) ; et, lorsque le moteur et l'embrayage sont désynchronisés, le sous-module de contrôle de synchronisation d'embrayage délivre un signal "Sync = 0" (Sync = 0).

3. Système de commande de rampage basé sur un couple embrayage cible pour une transmission automatique d'un poids lourd selon la revendication 1, **caractérisé en ce que**

un module d'estimation de température d'embrayage servant à estimer une température actuelle d'embrayage est placé dans l'unité de commande transmission (TCU), le module d'estimation de température d'embrayage est configuré avec un seuil de température d'alarme et un seuil de température de protection, et le sous-module de contrôle de surchauffe d'embrayage déterminé un état de chauffe (OH) de l'embrayage en comparant une température estimée obtenue auprès du module d'estimation de température d'embrayage, le seuil de température d'alarme et le seuil de température de protection ;

lorsque la température estimée dépasse le seuil de température d'alarme réglé, l'embrayage commute d'un état normal sur un état d'alarme, auquel cas le sous-module de contrôle de surchauffe d'embrayage délivre un signal "OH = 1" (OH = 1);

lorsque l'embrayage est dans l'état d'alarme, si la température estimée continue de monter et dépasse le seuil de température de protection, l'état de chauffe de l'em-brayage commute de l'état d'alarme sur un état de protection, auquel cas le sous-module de contrôle de surchauffe d'embrayage délivre un signal "OH = 2" (OH = 2);

lorsque l'embrayage est dans l'état de protection, si la température estimée chute, l'état de chauffe de l'em-brayage ne commute sur l'état d'alarme que lorsque la température estimée chute sous le seuil de température d'alarme; et

lorsque l'embrayage est dans l'état d'alarme, si la température estimée chute et la température estimée chute sous 60°C, l'état de chauffe de l'embrayage commute sur l'état normal, auquel cas le sous-module de contrôle de surchauffe d'embrayage délivre un signal "OH = 0" (OH = 0).

4. Système de commande de rampage basé sur un couple embrayage cible pour une transmission automatique d'un poids lourd selon la revendication 3, **caractérisé en ce que**

un module d'alarme est en outre placé dans l'unité de commande transmission (TCU), le module d'alarme est relié au sous-module de contrôle de surchauffe d'embrayage, le module d'alarme comprend une alarme bourdonnante, et une fréquence de bourdonnement de l'alarme bourdonnante est réglée de manière à coopérer avec la température d'embrayage, autrement dit la fréquence de bourdonnement est plus élevée lorsque la température d'embrayage est plus élevée; et

lorsque l'état de chauffe de l'embrayage est dans l'état d'alarme, dans le mode de commande de rampage dans un état d'accélérateur hybride, l'unité de commande transmission (TCU) est toujours apte à mettre en œuvre une commande de rampage sur l'embrayage, mais l'unité de commande transmission (TCU) envoie une alarme bourdonnante pour avertir un conducteur de la surchauffe imminente de l'embrayage et, dans une plage allant du seuil de température d'alarme au seuil de température de protection, la fréquence de bourdonnement est plus élevée lorsque la température est plus élevée.

5. Système de commande de rampage basé sur un couple embrayage cible pour une transmission automatique d'un poids lourd selon la revendication 1, **caractérisé en ce que**:

lorsque le véhicule adopte un mode de rampage, la commande de rampage de véhicule réalisée par l'unité de commande transmission (TCU) adopte, par défaut, le mode de commande de rampage dans un état d'attente; et

lorsque la commande de rampage de véhicule réalisée par l'unité de commande transmission (TCU) est dans le mode de commande de rampage dans un état d'attente, si le sous-module de contrôle de marche au débrayé de véhicule délivre le signal "Ovrn = 1", autrement dit si le véhicule est dans l'état de marche au débrayé (Ovrn = 1), la commande de rampage de véhicule réalisée par l'unité de commande transmission (TCU) commute de préférence du mode de commande de rampage dans un état d'attente sur le mode de commande de rampage dans un état d'engagement positif.

6. Système de commande de rampage basé sur un couple embrayage cible pour une transmission automatique d'un poids lourd selon la revendication 3, **caractérisé en ce que**:

lorsque la commande de rampage de véhicule réalisée par l'unité de commande transmission (TCU) est dans le mode de commande de rampage dans un état d'attente, si un conducteur appuie sur l'accélérateur jusqu'à une position qui dépasse une position d'accélérateur réglée, et le sous-module de contrôle de surchauffe d'embrayage délivre le signal "OH = 0", autrement dit si l'état de chauffe de l'em-brayage est dans l'état normal (OH = 0), la commande de rampage de véhicule réalisée par l'unité de commande transmission (TCU) commute du mode de commande de rampage dans un état d'attente sur le mode de commande de rampage dans un état d'accélérateur hybride.

7. Système de commande de rampage basé sur un couple embrayage cible pour une transmission automatique d'un poids lourd selon la revendication 3, **caractérisé en ce que**:

lorsque la commande de rampage de véhicule réalisée par l'unité de commande transmission (TCU) est dans le mode de commande de rampage dans un état d'accélérateur hybride, si le sous-module de contrôle de surchauffe d'embrayage délivre le signal "OH = 2", autrement dit si l'état de chauffe de l'embrayage est dans l'état de protection (OH = 2), la commande de rampage de véhicule réalisée par l'unité de commande transmission (TCU) commute sur un état correspondant selon la situation d'une différence de régimes (ES - IS) entre le régime moteur (ES) actuel et le régime d'arbre primaire (IS) de transmission, autrement dit si la différence de régimes (ES - IS) entre le régime moteur (ES) actuel et le régime d'arbre primaire (IS) de transmission est inférieure à 200 tr/min (ES - IS < 200 tr/min), la commande de rampage de véhicule réalisée par l'unité de commande transmission (TCU) commute du mode de commande de rampage dans un état d'accélérateur hybride sur le mode de commande de rampage dans un état d'engagement positif ; et, si la différence de régimes (ES - IS) entre le régime moteur (ES) actuel et le régime d'arbre primaire (IS) de transmission est supérieure à 200 tr/min (ES - IS < 200 tr/min), la commande de rampage de véhicule réalisée par l'unité de commande transmission (TCU) commute du mode de commande de rampage dans un état d'accélérateur hybride sur le mode de commande de rampage dans un état d'attente.

**8.** Système de commande de rampage basé sur un couple embrayage cible pour une transmission automatique d'un poids lourd selon la revendication 2, **caractérisé en ce que**:
lorsque la commande de rampage de véhicule réalisée par l'unité de commande transmission (TCU) est dans le mode de commande de rampage dans un état d'accélérateur hybride, si le sous-module de contrôle de synchronisation d'embrayage délivre le signal "Sync = 1", autrement dit lorsque le moteur et l'embrayage sont synchronisés (Sync = 1), la commande de rampage de véhicule réalisée par l'unité de commande transmission (TCU) commute du mode de commande de rampage dans un état d'accélérateur hybride sur le mode de commande de rampage dans un état de synchronisation.

**9.** Système de commande de rampage basé sur un couple embrayage cible pour une transmission automatique d'un poids lourd selon la revendication 2, **caractérisé en ce que**:
lorsque la commande de rampage de véhicule réalisée par l'unité de commande transmission (TCU) est dans le mode de commande de rampage dans un état d'engagement positif, si le sous-module de contrôle de synchronisation d'embrayage délivre le signal "Sync = 1", la commande de rampage de véhicule réalisée par l'unité de commande transmission (TCU) commute du mode de commande de rampage dans un état d'engagement positif sur le mode de commande de rampage dans un état de synchronisation.

**10.** Système de commande de rampage basé sur un couple embrayage cible pour une transmission automatique d'un poids lourd selon la revendication 2, **caractérisé en ce que**:
lorsque la commande de rampage de véhicule réalisée par l'unité de commande transmission (TCU) est dans le mode de commande de rampage dans un état de synchronisation, si le sous-module de contrôle de synchronisation d'embrayage délivre le signal "Sync = 0", autrement dit si le moteur et l'embrayage sont désynchronisés (Sync = 0), ou si un conducteur appuie sur une pédale de frein, la commande de rampage de véhicule réalisée par l'unité de commande transmission (TCU) commute du mode de commande de rampage dans un état de synchronisation sur le mode de commande de rampage dans un état d'accélérateur hybride.

**11.** Système de commande de rampage basé sur un couple embrayage cible pour une transmission automatique d'un poids lourd selon l'une quelconque des revendications 1 à 10, **caractérisé en ce que**:

lorsque la commande de rampage de véhicule réalisée par l'unité de commande transmission (TCU) est dans le mode de commande de rampage dans un état d'attente, la position d'embrayage cible (ICP) est constamment réglée sur une position de point de léchage (KP) d'embrayage, autrement dit,

$$ICP = KP,$$

ICP représentant la position d'embrayage cible et KP représentant la position de point de léchage d'embrayage, et
le régime moteur cible (TS) est constamment réglé sur un régime de ralenti du moteur, autrement dit,

$$TS = IS,$$

TS représentant le régime moteur cible et IS représentant le régime de ralenti du moteur.

**12.** Système de commande de rampage basé sur un couple embrayage cible pour une transmission automatique d'un poids lourd selon l'une quelconque des revendications 1 à 10, **caractérisé en ce que**

lorsque la commande de rampage de véhicule réalisée par l'unité de commande transmission (TCU) est dans le mode de commande de rampage dans un état d'engagement positif, la position d'embrayage cible (ICP) s'engage positivement à un régime fixe, autrement dit,

$$ICP[n] = ICP[n-1] – CP\_stp,$$

ICP[n] représentant une position d'embrayage cible (ICP) d'une étape de calcul actuelle, ICP[n-1] représentant une position d'embrayage cible (ICP) de la dernière étape de calcul mémorisée temporairement dans l'unité de commande transmission (TCU), et

CP_stp représentant une position d'engagement d'embrayage étalonnée pour chaque longueur d'étape dans l'état d'engagement positif; et

le régime moteur cible (TS) est maintenu au réglage du régime moteur cible avant l'activation de l'état d'engagement positif.

**13.** Système de commande de rampage basé sur un couple embrayage cible pour une transmission automatique d'un poids lourd selon l'une quelconque des revendications 2 à 10, **caractérisé en ce que**

lorsque la commande de rampage de véhicule réalisée par l'unité de commande transmission (TCU) est dans le mode de commande de rampage dans un état de synchronisation, la position d'embrayage cible (ICP) se fige à une valeur de position d'embrayage (ICP[Sync0]) à laquelle l'état de synchronisation a été activé et reste inchangée, et

l'unité de commande transmission (TCU) est configurée pour consigner une valeur de régime moteur cible (TS[Sync0]) et une valeur de position d'accélérateur (AP[Sync0]) au moment de l'activation de l'état de synchronisation, et pour calculer un régime moteur cible dans l'état de synchronisation au moyen de la formule suivante:

$$TS = Max((1600 - TS[Sync0])/(100 - AP[Sync0]) \times (AP - AP[Sync0]), 600),$$

TS représentant le régime moteur cible,
AP représentant le signal de position de pédale d'accélérateur,
AP[Sync0] représentant la valeur de position d'accélérateur,
TS[Sync0] représentant la valeur de régime moteur cible, et
ICP[Sync0] représentant la valeur de position d'embrayage.

**14.** Système de commande de rampage basé sur un couple embrayage cible pour une transmission automatique d'un poids lourd selon l'une quelconque des revendications 1 à 10, **caractérisé en ce que**
lorsque la commande de rampage de véhicule réalisée par l'unité de commande transmission (TCU) est dans le mode de commande de rampage dans un état d'accélérateur hybride, le régime moteur cible (TS) et la position d'embrayage cible (ICP) sont ajustés dynamiquement selon les étapes suivantes,

- à une première étape, le module de calcul de couple cible calcule le couple embrayage cible conducteur (ltdCltTrq) selon la position de pédale d'accélérateur;
- à une deuxième étape, un régulateur de régime moteur calcule un régime moteur cible (TS) correspondant selon le couple embrayage cible conducteur (ltdCltTrq);
- à une troisième étape, le module de limitation de taux de variation calcule un taux de variation admissible de couple embrayage selon une différence entre le régime moteur cible (TS) calculé à la deuxième étape et le régime moteur (ES) actuel, autrement dit une différence de variation admissible de couple embrayage pour une longueur d'étape, et limite le couple embrayage cible conducteur actuellement calculé, un couple embrayage cible obtenu après la limitation étant un couple embrayage cible limité (ltdCltTrqLmt); et
- à une quatrième étape, l'unité de commande transmission (TCU) calcule la position d'embrayage cible (ICP) selon le couple embrayage cible limité (ltdCltTrqLmt) au moyen d'une interpolation sur une courbe de transmission de couple embrayage.

*Fig. 1*

*Fig. 2*

*Fig. 3*

*Fig. 4*

Target clutch torque (%)

Limited maximum
available torque for
an optimal engine
speed

30%

Target clutch torque
ltdCltTrq

Accelerator pedal opening
degree (%)

0%

Trigger position
TriggerAP

Accelerator
pedal position
signal AP

Switch position
SwitchAP

100%

*Fig. 5*

Clutch-transmittable torque (%)

Limited maximum
available torque for an
optimal engine speed

Target clutch torque
ltdCltTrqLmt

Clutch position (%)

100%

Target clutch position ICP

Clutch
kiss point position

0%

*Fig. 6*

ES

IS

ACP

KP

Clutch
synchronization
check
sub-module

Sync

*Fig. 7*

ES

IS

Current gear

Direction of travel
of vehicle

Vehicle coasting
check
sub-module

Ovrn

*Fig. 8*

Estimated temperature

Alarm temperature
threshold

Protection temperature
threshold

Clutch
overheating check
sub-module

OH

## Fig. 9

Protection temperature
threshold

OH=2

OH=1

Alarm temperature
threshold

OH=0

OH=1

60°C

←—Estimated temperature

OH=0

## Fig. 10

ItdCltTrqLmt[n-1]

TS[n]

ES[n]

Target clutch
torque change
step length
calculation

Step[n]

ItdCltTrq[n]

1/Z

(+)

Min

ItdCltTrqLmt[n]

*Fig. 11*

Target engine speed TS (rpm)

Saturate speed
SaturateSpd

900rpm

800rpm

700rpm

Idle speed of the engine

0%

Start torque 10%
StartTrq

Saturate torque 40%   100%
SaturateTrq

Target clutch torque
ItdCltTrq(%)

*Fig. 12*

*Fig. 13*

*Fig. 14*

*Fig. 15*

*Fig. 16*

*Fig. 17*

*Fig. 18*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103359104 A
- EP 0731294 A2